(19) Europäisches Patentamt
European Patent Office
Office européen des brevets

(11) **EP 2 418 110 A2**

(12) **EUROPÄISCHE PATENTANMELDUNG**

(43) Veröffentlichungstag:
**15.02.2012 Patentblatt 2012/07**

(51) Int Cl.:
*B60G 21/05* (2006.01)    *B29C 70/00* (2006.01)

(21) Anmeldenummer: **11177145.7**

(22) Anmeldetag: **10.08.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **11.08.2010  DE 102010036949**

(71) Anmelder: **Muhr und Bender KG**
**57439 Attendorn (DE)**

(72) Erfinder:
• **Kobelev, Dr. Vladimir**
**57439 Attendorn (DE)**
• **Hahn, Christoph**
**57439 Attendorn (DE)**
• **Neubrand, Dr. Jörg**
**57258 Freudenberg (DE)**

(74) Vertreter: **Oberwalleney, Stephan et al**
**Neumann Müller Oberwalleney & Partner**
**Patentanwälte**
**Overstolzenstrasse 2a**
**50677 Köln (DE)**

(54) **Querträger für eine Verbundlenkerachse**

(57)    Die Erfindung betrifft einen Querträger 5 für eine Verbundlenkerachse 2 eines Kraftfahrzeugs, wobei der Querträger 5 eine Längsachse A2 aufweist und elastisch verformbar ist, und wobei der Querträger 5 eine Struktur aufweist, die derart gestaltet ist, dass eine elastische Torsionsverformung, die aufgrund eines um die Längsachse A2 wirksamen Torsionsmoments $M_Y$ entsteht, eine elastische Biegeverformung des Querträgers 5 bewirkt. Die Erfindung betrifft ferner eine Verbundlenkerachse 2 mit einem solchen Querträger 5.

Fig. 4c

EP 2 418 110 A2

**Beschreibung**

Die Erfindung betrifft einen Querträger für eine Verbundlenkerachse für Kraftfahrzeuge sowie eine Verbundlenkerachse mit einem solchen Querträger.

Verbundlenkerachsen sind aus dem Stand der Technik hinlänglich bekannt. Sie werden zur Führung der Räder einer Hinterachse eines Kraftfahrzeugs verwendet. Dabei kommen Verbundlenkerachsen insbesondere in der Kompaktklasse von Kraftfahrzeugen zum Einsatz, da sie sich durch einen geringen Bauraumbedarf und eine geringe Teilezahl auszeichnen. Eine Verbundlenkerachse umfasst üblicherweise zwei radtragende Längslenker sowie einen die beiden Längslenker miteinander verbindenden Querträger. Die Längslenker, die am Unterbau des Kraftfahrzeugs gelagert sind, sind dabei fest mit dem Querträger verbunden, der üblicherweise aus einem Rohrprofil besteht. Bei paralleler Federungsbewegung schwenkt die Verbundlenkerachse um die Verbindungslinie der Lagerstellen der Längslenker, und bei Wankfederung verwindet sich der Querträger in erster Näherung um die durch seinen Schubmittelpunkt vorgegebene neutrale Torsionsachse.

Nachteilig ist, dass Verbundlenkerachsen zu unerwünschtem Eigenlenkverhalten tendieren, was zu einem übersteuernden Fahrzeugverhalten führen kann. Dies hängt damit zusammen, dass die beim Durchfahren einer Kurve an den Rädern wirksamen Seitenkräfte, welche der Fliehkraft des Fahrzeuges entgegenwirken, die Radaufhängung derart verformen, dass die Längslenker sich zum momentanen Wendepunkt hin verbiegen. Die Reaktionskräfte führen zur Verbiegung der Aufhängung, so dass bei einer nachgiebigen Aufhängung eine Eigenlenkung der Hinterräder stattfindet, was zu einem unerwünschten Übersteuern des Kraftfahrzeugs führen kann.

Aus der DE 35 30 353 A1 ist eine Radaufhängung für nicht angetriebene Hinterräder eines Kraftfahrzeugs bekannt. Die Radaufhängung weist ein federndes Radführungselement auf, das aus einem geschlossenen Ring aus faserverstärktem Kunststoff besteht. Der Ring hat eine gestreckte sich quer zur Fahrzeugslängsachse erstreckende Form mit einem oberen Abschnitt, der mit der Karosserie verbunden wird, zwei seitlichen Abschnitten, die mit einem Radträger verbunden sind, und einen unteren Abschnitt, der eine weitere Befestigungsstelle aufweist. Die Befestigungsstellen des oberen Abschnitts und die Befestigungsstelle des unteren Abschnitts sind in Fahrzeuglängsrichtung beabstandet zueinander angeordnet, wodurch der Ring eine hohe Steifigkeit erhalten soll.

Aus der DE 103 57 885 A1 ist eine Torsionsachse mit zwei Längslenkern bekannt, die über ein sich quer dazu erstreckendes Torsionsprofil miteinander verbunden sind. An den in Fahrtrichtung hinteren Enden der Längslenker sind jeweils Seitenkräfte aufnehmende Querlenker angekoppelt. Hiermit soll einem Übersteuern entgegengewirkt werden und die fahrdynamischen Eigenschaften verbessert werden.

Aus der DE 10 2006 056 421 A1 ist eine Verbundlenkerachse für ein Kraftfahrzeug mit zwei seitlichen Längslenkern, die durch einen Querträger verbunden sind, bekannt. Der Querträger ist durch zumindest drei Längsprofile gebildet, die sich zwischen den Längslenkern erstrecken. Die einzelnen Längsprofile sollen eine Flexibilität hinsichtlich der Kombination von Torsions- und Biegesteifigkeit durch entsprechende Auslegung der Querschnittsgeometrie ermöglichen.

Aus der DE 10 2008 001 989 A1 ist eine Verbundlenkerachse für ein Kraftfahrzeug bekannt, die aus einem Faserverbundwerkstoff hergestellt ist. Durch gezielte Auslegung des Faserverbundes soll eine erhöhte Festigkeit in den Seitenteilen und eine Verringerung der Biegung im Querträger erreicht werden. Hierfür sollen zur Herstellung der Verbundlenkerachse dreidimensional geflochtene Verstärkungstextilien für Faserverbundwerkstoffe verwendet werden.

Aus der WO 02/081239 A1 ist eine Querstrebe für eine Verbundlenkerachse bekannt, die aus einem Strangpressprofil aus einer Aluminium-Legierung besteht. Die Querstrebe ist aus einem Mantelrohr und einem sich von der inneren Oberfläche des Mantelrohrs radial nach einen erstreckenden Längswulst zusammengesetzt. Hierdurch sollen sich Spur-, Sturz- und Rollsteifigkeit unabhängig trimmen lassen.

Aus der DE 102 54 556 A1, DE 43 30 192 A1, DE 195 42 105 A1, DE 10 2004 055 099 A1, DE 10 2006 041 567 A1, DE 60 2005 002 921 T2 und WO 2010/004370 A1 sind weitere Verbundlenkerachsen bekannt. Diese haben alle in dem für die Torsion maßgeblichen mittleren Abschnitt des Querträgers einen weitestgehend unveränderten Querschnitt über der Länge. Hieraus folgt, dass in den Querträger eingeleitete Torsionsmomente zu keiner oder, bei Querträgern mit veränderlichem Querschnitt über der Länge, allenfalls zu einer undefinierten Biegung des Querträgers führen. Nachteilig an den bekannten Verbunglenkerachsen ist, dass die an den Hinterrädern bei Kurvenfahrt wirksamen Seitenkräfte die Radaufhängung derart verformen, dass sich die Längslenker der Verbundlenkerachse zum momentanen Wendepunkt hin verbiegen. Die Reaktionskräfte führen zum leichten Verschwenken der Längslenker um die Hochachse des Kraftfahrzeugs, was zu einer Verbiegung des Querträgers führt. Hierdurch verschwenken die Räder in Kurvenrichtung, das heißt es tritt ein unerwünschtes Übersteuern des Kraftfahrzeugs auf.

In dem Buch "Leichtbau, Elemente und Konstruktion", 3. Auflage, Springer Verlag, von Prof. Dr. Johannes Wiedemann sind Grundsätze zur Wölbtorsion von Stabprofilen beschrieben. Werden I-, Z- oder C-Profile verdreht, treten Längsspannungen auf, deren Verteilung über den Querschnitt weder in Längskraft noch in Biegemoment resultiert, sondern ein in sich gleichgewichtiges Wölbmoment bildet. Es tritt eine Wölbtorsion am Profil auf, wobei die Längsachse des Profils gerade bleibt.

Der Erfindung liegt die Aufgabe zugrunde, eine Querstrebe für eine Verbundlenkerachse für ein Kraftfahrzeug vorzuschlagen, welche die Tendenz zum ungewünschten Übersteuern des Kraftfahrzeugs bei Kurvenfahrt vermindern soll und eine Verbesserung der fahrdynamischen Eigenschaften und der Komforteigenschaften erreichen soll. Die Aufgabe besteht weiter darin, eine Verbundlenkerachse mit einer solchen Querstrebe vorzuschlagen, die entsprechende verbesserte Fahrdynamik- und Komforteigenschaften bieten soll.

Die Lösung besteht in einem Querträger für eine Verbundlenkerachse eines Kraftfahrzeugs, wobei der Querträger eine Längsachse A2 aufweist und elastisch verformbar ist, und wobei der Querträger eine Struktur aufweist, die derart gestaltet ist, dass eine elastische Torsionsverformung, die aufgrund eines um die Längsachse A2 wirksamen Torsionsmoments entsteht, eine elastische Biegeverformung des Querträgers bewirkt. Um ein gezieltes Biegeverhalten zu erreichen, weist die Struktur einzelne Strukturelemente auf, die relativ zur Längsachse A2 des Querträgers winklig verlaufen, wobei diese Strukturelemente in Bezug auf eine Ebene $E_{zx}$, die senkrecht zur Längsachse A2 verläuft, symmetrisch sind.

Der Vorteil besteht darin, dass bei Kurvenfahrt eines Kraftfahrzeugs, das mit einem erfindungsgemäßen Querträger ausgestattet ist, gezielt eine Verformung im Querträger erzeugt werden kann, die einem ungewünschten Eigenlenkverhalten des Kraftfahrzeugs entgegenwirkt und dieses kompensiert. Auf diese Weise werden die fahrdynamischen Eigenschaften erheblich verbessert. Insbesondere wird durch den erfindungsgemäßen Querträger ein ungewünschtes Übersteuern des Kraftfahrzeugs bei Kurvenfahrt verhindert, so dass die Fahrstabilität, gerade auch in kritischen Fahrsituationen verbessert wird. Der gewünschte Effekt wird dadurch erreicht, dass die einzelnen Strukturelemente eine Kraft in ihrer Haupterstreckungsrichtung übertragen und insofern wie Zug- bzw. Druckbalken innerhalb des Querträgers wirken. Bei Einleitung eines Torsionsmoments in den Querträger um die Längsachse A2 werden, aufgrund ihrer zur Längsachse A2 windschiefen und zur Mittelebene $E_{zx}$ symmetrischen Anordnung, eine erste Gruppe der Strukturelemente, auf Zug belastet und dadurch verlängert, während eine zweite Gruppe der Strukturelemente auf Druck belastet und dadurch verkürzt werden. Insgesamt erfährt die eine Seite des Querträgers aufgrund der Hebelwirkung der einzelnen Strukturelemente, eine etwa C-förmige elastische Biegung relativ zur Mittelebene $E_{zx}$ in eine erste Richtung, während die andere Seite des Querträgers aufgrund der Hebelwirkung der einzelnen Strukturelemente in entgegengesetzter Richtung eine C-förmige elastische Biegung relativ zur Mittelebene $E_{zx}$ mit entgegegesetztem Krümmungssinn erfährt. Insgesamt wird so eine etwa S-förmige elastische Verbiegung des Querträgers erzeugt, die einem ungewünschten Eigenlenkverhalten des Kraftfahrzeugs entgegenwirken und dieses kompensieren kann.

Der Querträger ist elastisch gestaltet. Bei Kurvenfahrt wird der Querträger aufgrund der von den Längslenkern einwirkenden Biegemomente und Torsionsmomente entsprechend elastisch gebogen bzw. tordiert. Bei Geradeausfahrt nimmt der Querträger wieder seine ursprüngliche Form ein.

Die gezielte Verformung des Querträgers wird durch die Gestaltung der Struktur des Querträgers erreicht, welche eine Kopplung von Torsionsverformung und Biegeverformung bewirkt. Mit Struktur ist in diesem Zusammenhang die Anordnung bzw. Ausgestaltung des Querträgers bzw. einzelner Teilabschnitte des Querträgers und deren Zusammenwirken miteinander gemeint, die zu einer gezielten Verformung beitragen. Dabei kann es sich um Bereiche innerhalb eines einteiligen Querträgers handeln, die gegenüber einem anderen Bereich unterschiedliche Eigenschaften, insbesondere unterschiedliche Festigkeitseigenschaften, haben. Es kann sich auch um einzelne Elemente eines aus mehreren Elementen zusammengesetzten Querträgers handeln, die sich hinsichtlich der Ausrichtung und/oder Form unterscheiden. Diese Teilabschnitte, Bereiche bzw. Elemente der Querträgerstruktur, welche eine Kopplung von Torsionsverformung und Biegeverformung bewirken, werden übergreifend auch als Strukturelemente des Querträgers bezeichnet.

Die Struktur ist in Bezug auf eine erste Ebene $E_{zx}$, die senkrecht zur Längsachse A2 verläuft und den Querträger mittig teilt, symmetrisch. Die Strukturlemente sind relativ zur ersten Ebene $E_{zx}$ spiegelsymmetrisch gestaltet bzw. angeordnet. Die erste Ebene $E_{zx}$ kann auch als Mittelebene bezeichnet werden.

Vorzugsweise ist die Struktur relativ zu einer zweiten Ebene $E_{xy}$, welche senkrecht zur ersten Ebene $E_{zx}$ angeordnet ist und die Längsachse A2 beinhaltet, zumindest mit Teilabschnitten asymmetrisch. Eine asymmetrische Anordnung kann dadurch erreicht werden, dass die Struktur bzw. die strukturgebenden Teilabschnitte winklig zur zweiten Ebene $E_{XY}$ verlaufen. Die zweiten Ebene $E_{XY}$ teilt den Querträger mittig entlang der Längsachse A2 und kann insofern auch als Längsmittelebene bezeichnet werden.

Nach einer bevorzugten Weiterbildung ist die Struktur bzw. Teilabschnitte der Struktur (Strukturelemente) in Bezug auf eine dritte Ebene $E_{YZ}$, welche senkrecht zur ersten Ebene $E_{ZX}$ und zur zweiten Ebene $E_{XY}$ angeordnet ist und die Längsachse A2 beinhaltet, symmetrisch. Insgesamt wird durch diese Ausgestaltung der Struktur bzw. der Strukturelemente, das heißt Spiegelsymmetrie zu zwei senkrechten Ebenen $E_{ZX}$, $E_{YZ}$ und Asymmetrie zu einer weiteren senkrechten Ebene $E_{XY}$, in vorteilhafter Weise erreicht, dass die Biegeverformung des Querträgers bei Einleitung eines Torsionsmoments zumindest etwa S-förmig um die zweite Ebene $E_{XY}$ ist, und dabei der Torsionsverformung entgegengerichtet ist.

Nach einer bevorzugten Ausgestaltung weist der Querträger zumindest zwei längliche Abschnitte auf, die miteinander verbunden sind, wobei zumindest einer der länglichen Abschnitte zumindest weitestgehend strukturelementfrei gestaltet ist und wobei zumindest ein anderer der länglichen Abschnitte die winklig zur Längsachse verlaufenden Strukturelemente aufweist oder durch diese gebildet ist. Strukturelementfrei bedeutet in diesem Zusammenhang, dass die jeweiligen Abschnitte zumindest größtenteils eine homogene Struktur bzw. Aufbau haben, ohne Torsions-Biege-Kopplung. Bei den zumindest zwei länglichen Abschnitten kann es sich um gedankliche Abschnitte eines einteiligen Querträgerkörpers handeln; es können aber auch einzelne Elemente eines aus mehreren Elementen konstruktiv zusammengesetzten Querträgers sein. Der bzw. die strukturelementfrei gestalteten Abschnitte sind mit den Strukturelementen verbunden, so dass hier eine Kraftübertragung erfolgen kann.

In Konkretisierung hat die Struktur vorzugsweise einen ersten länglichen Abschnitt und einen zweiten länglichen Abschnitt, die sich zumindest etwa in Längsrichtung des Querträgers erstrecken, und zumindest einen Zwischenabschnitt, der zwischen dem ersten länglichen Abschnitt und dem zweiten länglichen Abschnitt angeordnet und mit diesen verbunden ist, wobei die Strukturelemente zumindest größtenteils in diesem Zwischenabschnitt angeordnet oder durch diesen gebildet sind. Dabei verbinden die Strukturelemente des Zwischenabschnitts den ersten und zweiten Abschnitt miteinander, so dass durch die Strukturelemente eine Kraftübertragung zwischen dem ersten und zweiten Abschnitt erfolgt. Nach einer möglichen Weiterbildung kann vorgesehen sein, dass der erste und zweite längliche Abschnitt zumindest etwa parallel zueinander verlaufen. Vorzugsweise schließen die im Zwischenabschnitt enthaltenen Strukturelemente bzw. der Zwischenabschnitt selbst mit der Längsachse des Querträgers einen spitzen Winkel ein. Durch den Zwischenabschnitt mit seinen Strukturelementen erfolgt eine Kopplung zwischen dem ersten länglichen Abschnitt und dem zweiten länglichen Abschnitt. Auf diese Weise wird eine Torsionsverformung des einen der beiden länglichen Abschnitte auf den anderen länglichen Abschnitt übertragen, was zu einer elastischen Biegung des Querträgers führt. Der erste und zweite längliche Abschnitt sind beispielsweise eine erste und eine zweite Schicht des Querträgers, die sich zumindest über einen Teil der Länge des Querträgers oder dessen gesamter Länge erstrecken. Zwischen der ersten und zweiten Schicht befindet sich dann eine Zwischenschicht mit anderen Eigenschaften. Es kann sich bei den länglichen Abschnitten auch um ein erstes und ein zweites Element handeln, die über ein oder mehrere Zwischenelemente miteinander zur Kraftübertragung verbunden sind bzw. gegeneinander abgestützt sind.

Die Struktur des Querträgers lässt sich zumindest auf drei unterschiedliche Weisen realisieren.

Nach einer ersten Ausführungsform besteht der Querträger aus einem Werkstoff mit richtungsabhänigem Verhalten. Dies bezieht sich auf mechanische Eigenschaften wie die Elastizitätsgrößen und die Festigkeiten. Eine solche Richtungsabshängigkeit von Eigenschaften wird auch als Anisotropie bezeichnet. Insbesondere kommt als Werkstoff mit anisotropem Verhalten Kunststoff oder ein Kunststoff enthaltender Werkstoff in Frage. Besonders günstig ist es, wenn der Querträger aus einem Faserverbundwerkstoff hergestellt ist. Dabei kann die Struktur einzelne Fasern und/oder 2D-Geflechte, das heißt zweidimensional geflochtene Verstärkungstextilien, und/oder 3D-Geflechte, d. h. dreidimensional geflochtene Verstärkungstextilien, und/oder Gestricke und/oder Gewebe umfassen. Die Torsions-Biege-Kopplung innerhalb der Struktur wird durch die Strukturelemente erreicht. Dies können einzelne Fasern oder Lamellen bzw. verstärkte Teilbereiche des Faserverbundwerkstoffs sein, die so angeordnet sind, dass die Struktur in einer zur Längsachse windschiefen Richtung eine höhere Festigkeit aufweist, als in einer zur Längsachse parallelen oder senkrechten Richtung.

Vorzugsweise sind einzelne Fasern oder Teilbereiche des Faserverbundwerkstoffs zumindest abschnittsweise so angeordnet, dass diese mit der Längsachse des Querträgers einen spitzen Winkel einschließen. Unter einem spitzen Winkel wird ein Winkel zwischen 0° und 45° verstanden. Besonders günstig ist es, wenn der eingeschlossene Winkel zwischen 10° und 35° liegt. Durch die winklige Anordnung der einzelnen Fasern bzw. einzelner Teilbereiche des Faserverbundes wird die gewünschte Struktur erzeugt, welche eine Kopplung der Torsionsverformung und der Biegeverformung des Querträgers bewirkt. Dabei gilt, dass die Biegeverformung des Querträgers mit zunehmendem Winkel der Fasern zur Torsionsachse zunimmt. Die winklig verlaufenden Fasern bzw. Teilbereiche verbinden unterschiedliche Schichten des Querträgers miteinander, so dass die Torsionsverformung einer Schicht eine Biegung einer zweiten Schicht bewirkt. Die Schichten werden auch als längliche Abschnitte des Querträgers bezeichnet.

Nach einer bevorzugten Ausgestaltung ist zumindest eine Teilzahl der Fasern bzw. sind Teilbereiche des Faserverbundwerkstoffs um die Längsachse gewickelt, wobei die Fasern in einem ersten Umfangsabschnitt einen ersten Steigungswinkel und in einem zweiten Umfangsabschnitt einen zweiten Steigungswinkel relativ zur Längsachse des Querlenkers haben, wobei der erste Steigungswinkel und der zweite Steigungswinkel unterschiedlich groß sind. Diese Ausgestaltung gilt insbesondere für einen gewickelten Körper. Durch die unterschiedlichen Steigungswinkel der einzelnen Fasern über dem Umfang des Querträgers wird für einen gewickelten Körper die gewünschte Struktur erzeugt, welche eine Kopplung der Torsionsverformung und der Biegeverformung bewirkt.

Vorzugsweise weist die aus einem Faserverbundwerkstoff hergestellte Struktur einen ersten Halbabschnitt und einen zweiten Halbabschnitt auf, wobei die Anordnung der Faserverbunde, das heißt der Fasern, Gewebe bzw. Gestricke, des ersten Halbabschnitt zur Anordnung der Faserverbunde des zweiten Halbteils relativ zur Mittelebene symmetrisch sind. Die Mittelebene ist senkrecht zur Längsachse des Querträgers angeordnet und teilt diesen mittig.

Nach einer zweiten Ausführungsform besteht der Querträger aus einem Werkstoff mit isotropem Verhalten. Isotropie heißt, dass die Eigenschaften eines Körpers in allen Richtungen gleich oder anders ausgedrückt richtungsunabhängig sind. Als isotroper Werkstoff kommt insbesondere die Verwendung eines Stahlwerkstoffs in Frage. Die gewünschte Struktur des Querträgers wird bei dieser zweiten Ausführungsform konstruktiv gelöst, das heißt durch entsprechende Ausgestaltung und Anordnung einzelner Teilkomponenten bzw. Elemente zu einer Baugruppe, die den Querträger bildet.

Die aus einem Werkstoff mit isotropem Verhalten gebildete Struktur kann zumindest zwei oder drei längliche Elemente aufweisen, die miteinander verbunden sind, wobei zumindest eines der länglichen Elemente zumindest in einem Teilabschnitt mit der Längsachse des Querträgers einen spitzen Winkel einschließt. Unter einem spitzen Winkel wird ein Winkel zwischen 0° und 45° verstanden. Besonders günstig ist es, wenn der eingeschlossene Winkel zwischen 10° und 35° liegt. Dabei gilt grundsätzlich, dass je größer der Winkel zwischen dem winklig verlaufenden Element und der Torsionsachse ist, desto größer ist auch die Biegeverformung des Querträgers bei Einleitung eines Torsionsmoments. Die länglichen Elemente, die auch als Längsprofile bezeichnet werden können, erstrecken sich vorzugsweise von einem Ende des Querträgers zum anderen Ende. An den Enden des Querträgers werden die Längslenker angebracht, um gemeinsam eine Verbundlenkerachse zu bilden. Vorzugsweise sind die Längsprofile aus Flachmaterial hergestellt, wobei grundsätzlich auch die Verwendung von Rundmaterial oder anderen Querschnittsformen denkbar ist.

Das zumindest eine winklig verlaufende Element ist abschnittsweise gerade oder gekrümmt. Das bedeutet, dass das Element über seine gesamte Länge einen gekrümmten Verlauf haben kann oder einen oder mehrere gerade Teilabschnitte oder aus einem oder mehreren geraden und einem oder mehreren gekrümmten Abschnitten zusammengesetzt sein kann. Vorzugsweise hat das zumindest eine winklig verlaufende Element eine größere Länge als zumindest ein weiteres der Elemente. Zumindest ein winklig verlaufendes Element bedeutet, dass auch mehrere solcher winklig verlaufender Elemente übereinander angeordnet sein können.

Nach einer bevorzugten Ausgestaltung sind ein erstes und ein zweites längliches Element parallel und mit Abstand zueinander angeordnet und ein drittes längliches Element ist zwischen dem ersten und zweiten länglichen Element angeordnet. Dabei schließt das dritte Element, das aufgrund der Anordnung zwischen dem ersten und zweiten Element auch als Zwischenelement bezeichnet werden kann, zumindest in einem Teilabschnitt einen größeren Winkel mit der Längsachse ein als das erste und zweite Element. Die länglichen Elemente werden zumindest an ihren Enden miteinander verbunden, wobei die Verbindung der Elemente untereinander auch mittelbar über die Längslenker erfolgen kann.

Die aus einem Werkstoff mit isotropem Verhalten gebildete Struktur kann nach einer Variante ein im Querschnitt betrachtet ein U-förmiges Profil haben. Dabei weist die Öffnung des U-förmigen Profils im Einbauzustand vorzugsweise nach unten. Auf diese Weise wird bei Einleitung eines Torsionsmoments eine Biegeverformung um die Z-Achse erzeugt, welche dem Eigenlenkverhalten entgegenwirkt. Nach einer möglichen Weiterbildung hat das U-förmige Profil in Seitenansicht eine Wölbung, das heißt ein zentraler Abschnitt des Querträgers hat zur Längsachse einen größeren Abstand als die beiden Endabschnitte. Auf diese Weise lässt sich eine besonders hohe Torsion-Biegungs-Kopplung erreichen.

Nach einer dritten Ausführungsform hat der Querträger eine Struktur, mit der eine konstruktive Anisotropie erzeugt wird und die aus einem anisotropen Werkstoff besteht. Insofern bildet die dritte Ausführungsform eine Kombination der ersten und der zweiten Ausführungsform. Mit dieser dritten Ausführungsform lassen sich Querträger herstellen, die eine besonders ausgeprägte Torsions-Biegekopplung aufweisen. Besonders geeignet für die dritte Ausführungsform eignet sich ein Querträger mit geradem oder gewölbten U-Profil, welches nach unten hin offen ist.

Für alle der obengenannten Ausführungsformen gilt, dass der Querträger im Querschnitt betrachtet ein geschlossenes, ein semi-geschlossenes oder ein offenes Profil aufweisen kann.

Die Lösung der obengenannten Aufgabe besteht weiter in einem Verbundlenker für ein Kraftfahrzeug mit einem ersten Längslenker, einem zweiten Längslenker und einem den ersten und den zweiten Längslenker miteinander verbindenden Querträger, wobei der Querträger nach einer der obengenannten erfindungsgemäßen Ausführungsformen gestaltet ist.

Der Vorteil besteht darin, dass bei Kurvenfahrt eines Kraftfahrzeugs eine Verformung im Querträger erzeugt werden kann, die einem ungewünschten zum Übersteuern neigenden Eigenlenkverhalten des Kraftfahrzeugs entgegenwirkt. Die fahrdynamischen Eigenschaften, insbesondere bei Kurvenfahrt, werden somit erheblich verbessert.

Nach einer bevorzugten Ausgestaltung ist vorgesehen, dass der Querträger derart zu den beiden Längslenkern ausgerichtet und an diese angebunden ist, dass, wenn bei Kurvenfahrt des Kraftfahrzeugs ein Torsionsmoment von den Längslenkern auf den Querträger einwirkt, von der Struktur des Querträgers ein dem Eigenlenkverhalten entgegenwirkendes Biegemoment im Querträger erzeugt wird.

Nach einer ergänzenden oder alternativen Ausgestaltung ist vorgesehen, dass der Querträger derart zu den beiden Längslenkern ausgerichtet und an diese angebunden ist, dass, wenn bei Kurvenfahrt des Kraftfahrzeugs ein Biegemoment von den Längslenkern auf den Querträger einwirkt, von der Struktur des Querträgers ein dem Eigensturzverhalten entgegenwirkendes Torsionsmoment im Querträger erzeugt wird.

Die Längslenker haben jeweils einen Lagerabschnitt zum Lagern an einem ortsfesten Bauteil, insbesondere einem Karosseriebauteil, einen Anbindungsabschnitt zur Anbindung eines Rades und einen Verbindungsabschnitt zum festen Verbinden mit dem Querträger. Eine Gerade durch die beiden Lagerabschnitte definiert die Schwenkachse des Verbundlenkers. Eine Gerade durch die Anbindungen der Längslenker an die Räder definiert die Kraftwirkungslinie der Reaktionskraft. Eine Gerade durch die Verbindungsstellen zwischen Querträger und den beiden Längslenkern definiert die Mittelachse oder Längsachse des Querträgers. Besonders günstig ist es, wenn die Schwenkachse des Verbundlenkers und die Längsachse des Querträgers einander zumindest angenähert sind.

Die Struktur des Querträgers ist vorzugsweise zu einer Horizontalebene, die durch die Schwenkachse des Verbundlenkers bzw. die Längsachse des Querträgers aufgespannt wird, unsymmetrisch. Alternativ hierzu kann die Struktur auch zu einer zur genannten Horizontalebene senkrechten Ebene durch die Längsachse des Querträgers unsymmetrisch gestaltet sein. Es ist prinzipiell auch denkbar, dass der Querträger so gestaltet bzw. mit den Längslenkern verbunden ist, dass die Struktur zu beiden genannten Ebenen unsymmetrisch ist.

Bevorzugte Ausführungsbeispiele werden nachstehend anhand der Zeichnungsfiguren erläutert. Hierin zeigt

Figur 1      schematisch eine Verbundlenkerachse

           a) in Draufsicht,

           b) in Rückansicht,

Figur 2      die Verbundlenkerachse gemäß Figur 1 in elastisch verformtem Zustand aufgrund Kurvenfahrt

           a) in Draufsicht,

           b) in Rückansicht,

Figur 3      schematisch ein Kraftfahrzeug in Draufsicht mit einer Verbundlenkerachse gemäß Figur 1 bzw. Figur 2 beim Durchfahren einer Kurve

Figur 4      einen erfindungsgemäßen Querträger bzw. eine erfindungsgemäße Verbundlenkerachse in einer ersten Ausführungsform schematisch

           a) in Draufsicht in unbelastetem Zustand,

           b) in Rückansicht in unbelastetem Zustand,

           c) in perspektivischer Darstellung,

           d) in verformtem Zustand aufgrund Einleitung eines Torsionsmoments,

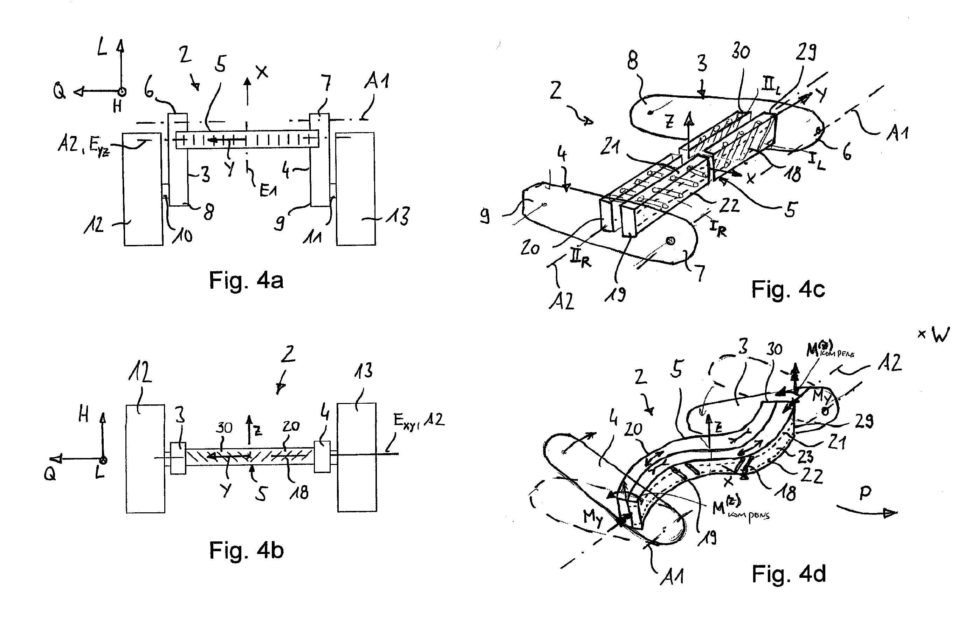

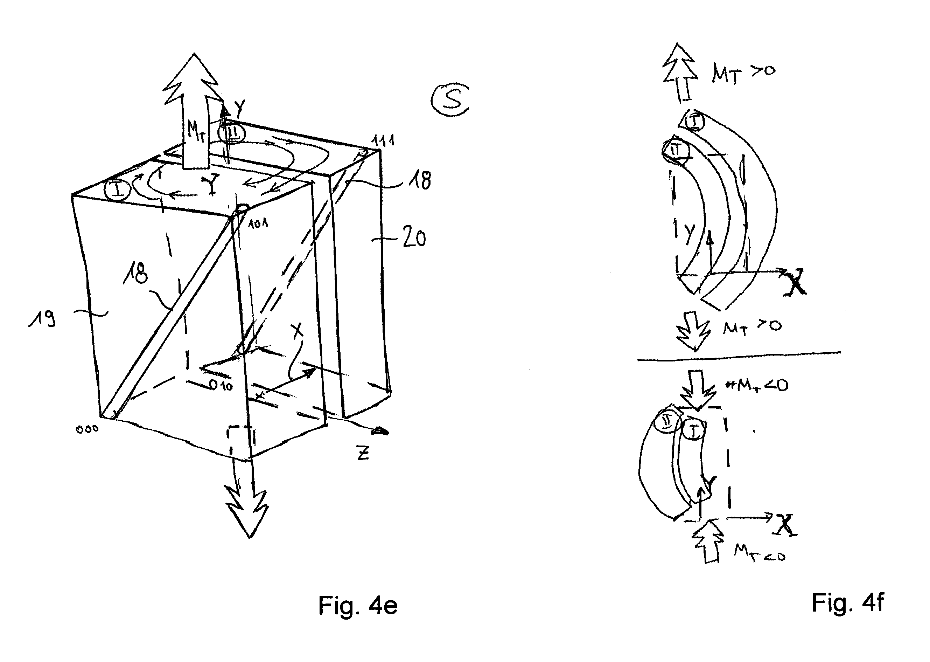

           e) schematisch einen Abschnitt des Querträgers gemäß Figur 4,

           f) in verformtem Zustand aufgrund Einleitung eines Torsionsmoments in Draufsicht,

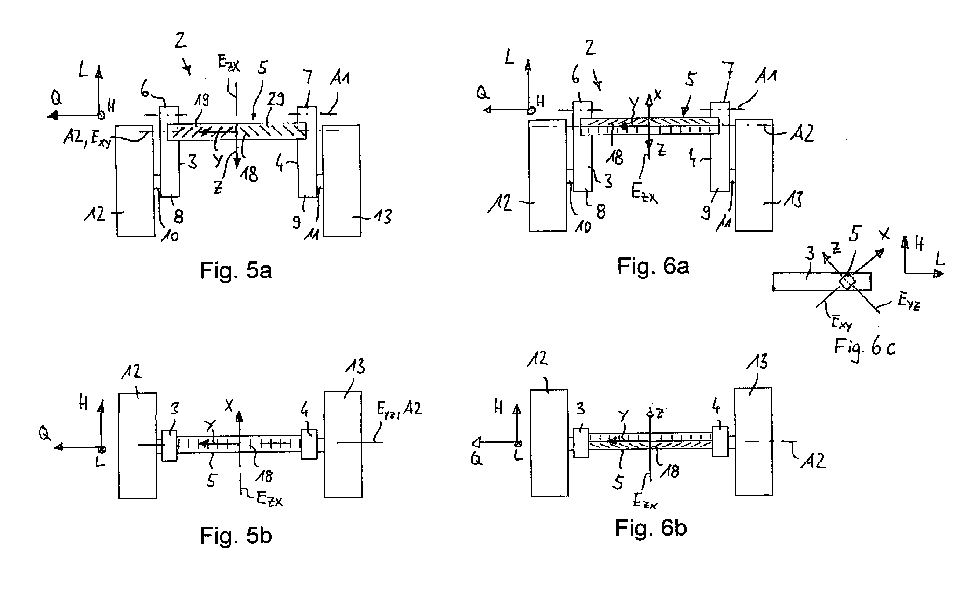

Figur 5      eine erfindungsgemäße Verbundlenkerachse in einer zweiten Ausführungsform mit einem erfindungsgemäßen Querträger

           a) in Draufsicht,

           b) in Rückansicht,

Figur 6      eine erfindungsgemäße Verbundlenkerachse in einer dritten Ausführungsform mit einem erfindungsgemäßen Querträger

           a) in Draufsicht,

           b) in Rückansicht,

           c) im Querschnitt durch den Querträger,

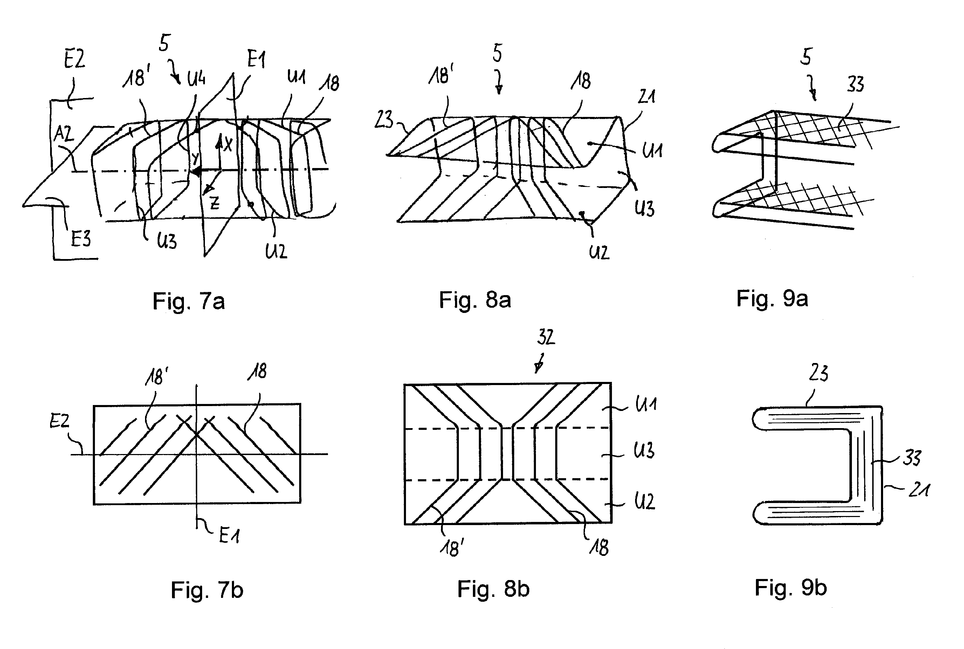

Figur 7      eine erste Faserverbundstruktur für einen Querträger nach einer der Ausführungsformen gemäß den Figuren 4 bis 6 mit geschlossenem Profil

a) in perspektivischer Ansicht,

b) in Abwicklung,

Figur 8    eine zweite Faserverbundstruktur für einen Querträger nach einer der Ausführungsformen gemäß den Figuren 4 bis 6 mit offenem Profil

a) in perspektivischer Ansicht,

b) in Abwicklung,

Figur 9    eine dritte Faserverbundstruktur für einen Querträger nach einer der Ausführungsformen gemäß den Figuren 4 bis 6 mit semi-geschlossenem Profil

a) in perspektivischer Ansicht,

b) im Querschnitt,

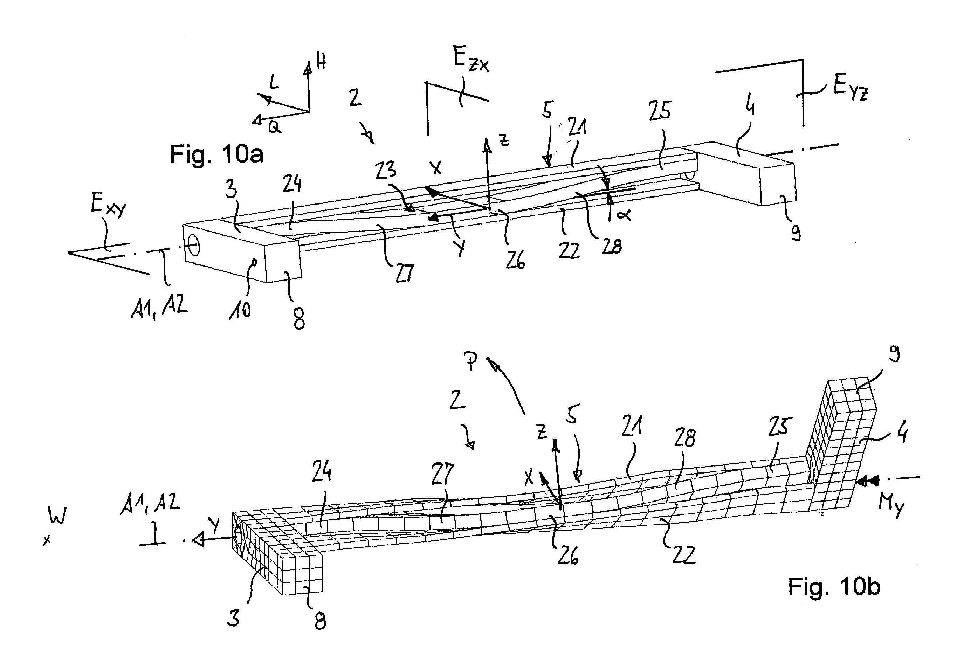

Figur 10    eine erfindungsgemäße Verbundlenkerachse mit einem erfindungsgemäßen Querträger in einer weiteren Ausführungsform

a) in unbelastetem Zustand in perspektivischer Ansicht,

b) unter Einwirkung eines Torsionsmoments in perspektivischer Ansicht,

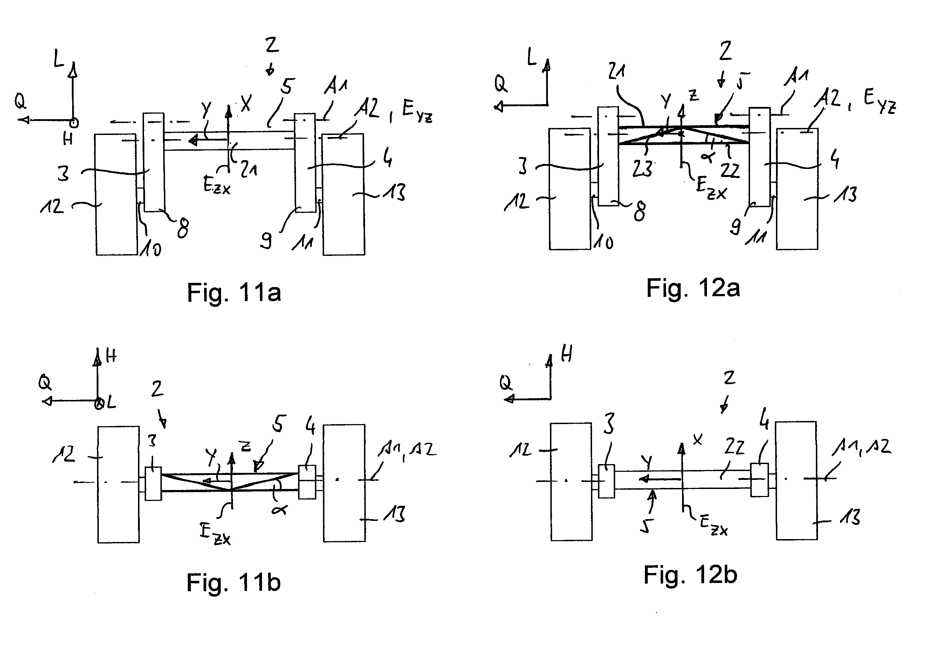

Figur 11    eine erfindungsgemäße Verbundlenkerachse mit einem erfindungsgemäßen Querträger in einer weiteren Ausführungsform

a) in Draufsicht,

b) in Rückansicht,

Figur 12    eine erfindungsgemäße Verbundlenkerachse mit einem erfindungsgemäßen Querträger in einer weiteren Ausführungsform

a) in Draufsicht,

b) in Rückansicht,

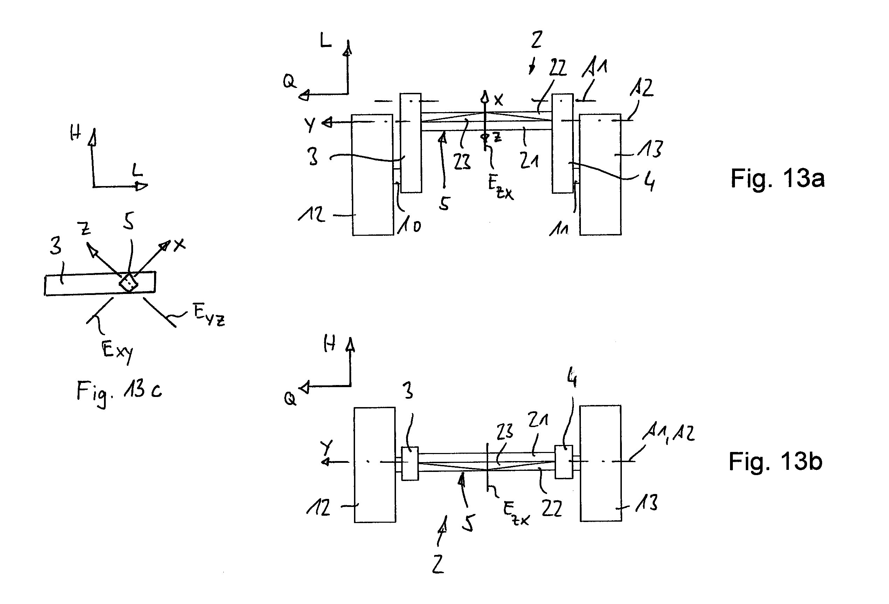

Figur 13    eine erfindungsgemäße Verbundlenkerachse mit einem erfindungsgemäßen Querträger in einer weiteren Ausführungsform

a) in Draufsicht,

b) in Rückansicht,

c) im Querschnitt durch den Querträger,

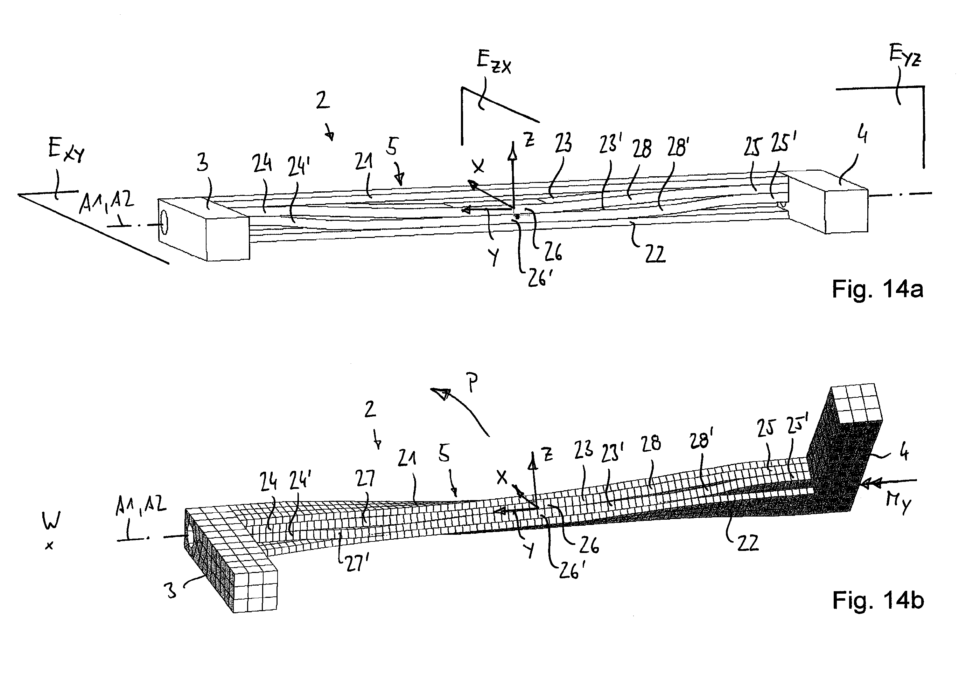

Figur 14    eine erfindungsgemäße Verbundlenkerachse mit einem erfindungsgemäßen Querträger in einer weiteren Ausführungsform

a) in unbelastetem Zustand in perspektivischer Ansicht,

b) unter Einwirkung eines Torsionsmoments in perspektivischer Ansicht,

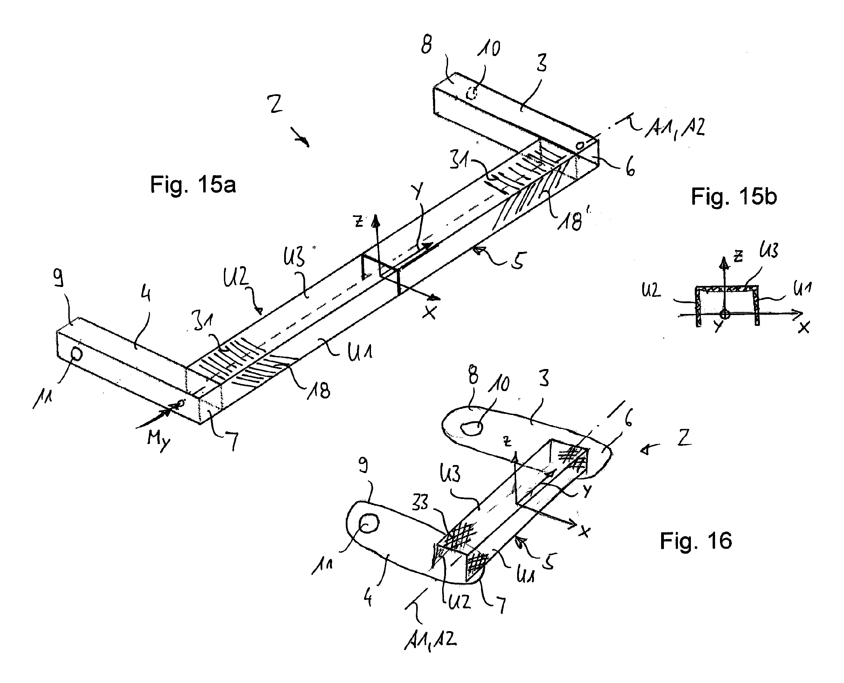

Figur 15    eine erfindungsgemäße Verbundlenkerachse mit einem erfindungsgemäßen Querträger in einer weiteren Ausführungsform

a) in unbelastetem Zustand in perspektivischer Ansicht,

b) im Querschnitt durch den Querträger,

Figur 16     eine erfindungsgemäße Verbundlenkerachse mit einem erfindungsgemäßen Querträger in einer weiteren Ausführungsform in perspektivischer Darstellung,

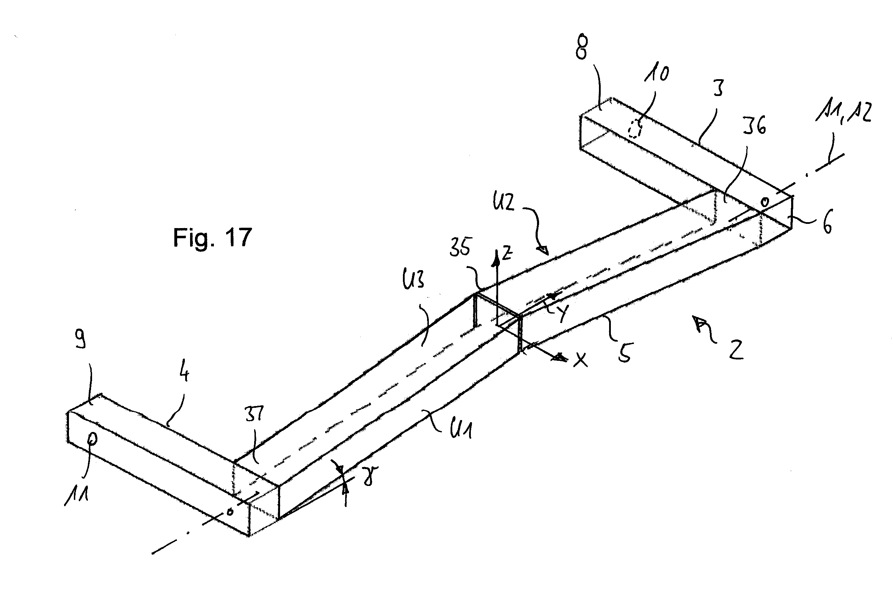

Figur 17     eine erfindungsgemäße Verbundlenkerachse mit einem erfindungsgemäßen Querträger in einer weiteren Ausführungsform in perspektivischer Darstellung,

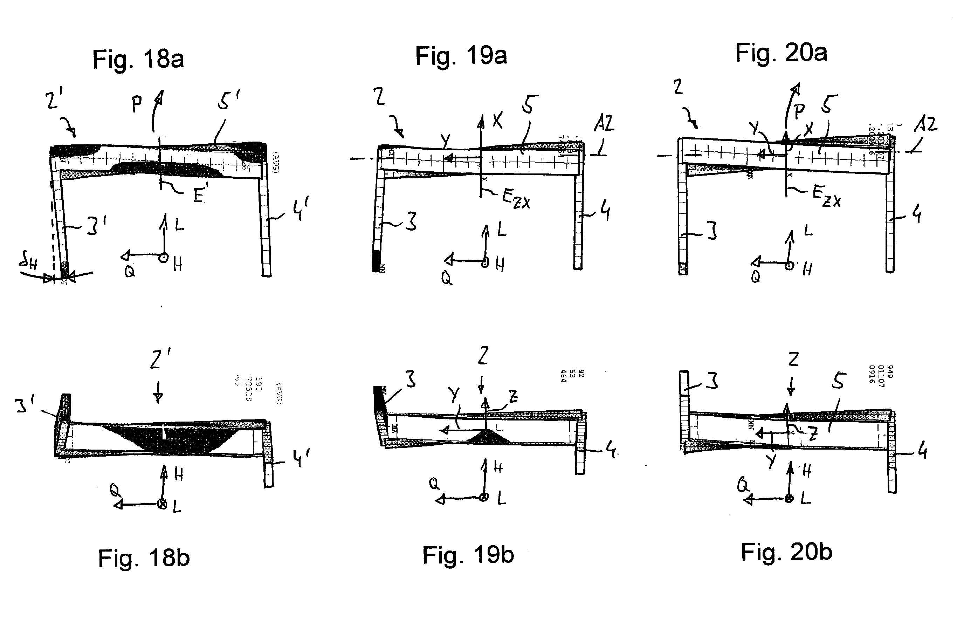

Figur 18     einen herkömmlichen Querträger in einer Belastungssimulation beim Durchfahren einer Rechtskurve

a) in Draufsicht,

b) in Rückansicht,

Figur 19     einen erfindungsgemäßen Querträger nach einer der obengenannten Ausführungsformen gemäß den Figuren 4 bis 17 in einer Belastungssimulation bei Einleiten eines Torsionsmoments um die Längsachse des Querträgers

a) in Draufsicht,

b) in Rückansicht,

Figur 20     einen erfindungsgemäßen Querträger nach einer der obengenannten Ausführungsformen gemäß den Figuren 4 bis 17 in einer Belastungssimulation beim Durchfahren einer Rechtskurve und daraus resultierendem Einleiten eines Torsionsmoments um die Längsachse des Querträgers

a) in Draufsicht,

b) in Rückansicht.

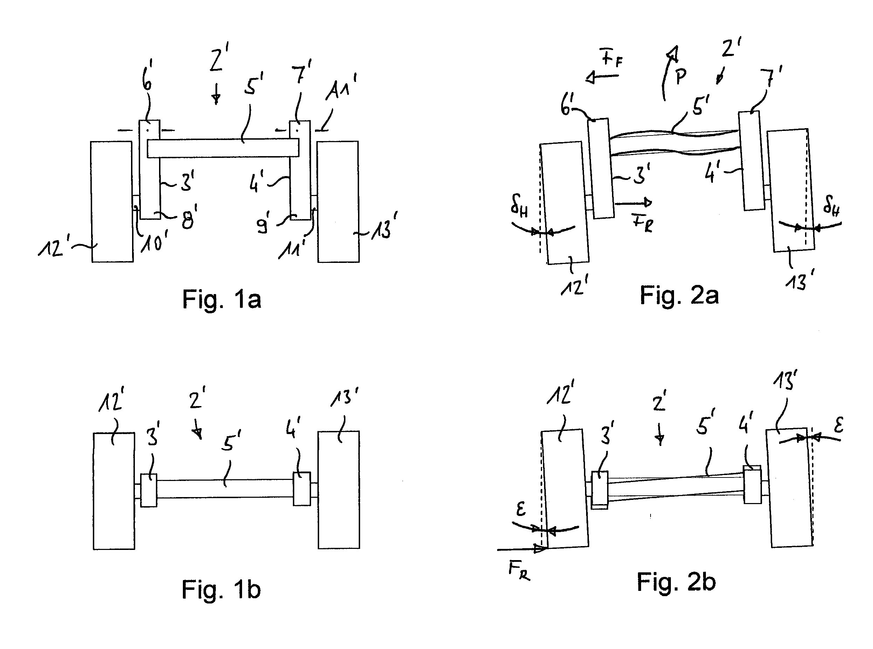

Die Figuren 1 bis 3 werden im Folgenden gemeinsam beschrieben. Es ist eine Verbundlenkerachse 2' nach dem Stand der Technik gezeigt, die einen ersten Längslenker 3', einen zweiten Längslenker 4' und einen die beiden Längslenker 3', 4' miteinander verbindenden Querträger 5' aufweist. Die beiden Längslenker 3', 4' haben an ihren vorderen Enden 6', 7' Lagerstellen, über welche die Verbundlenkerachse 2' an einem hier nicht näher dargestellten Fahrzeugaufbau um eine Achse A1 schwenkbar gelagert ist. Bei den Lagern handelt es sich üblicherweise um Gummi-Metalllager. An den hinteren Enden 8', 9' sind Achszapfen 10', 11' an den Längslenkern 3', 4' angebracht. An den Achszapfen 10', 11' ist jeweils ein Rad 12', 13' gelagert.

In den Figuren 2a und 2b ist schematisch gezeigt, wie sich die Verbundlenkerachse 2' aus Figur 1 bei Kurvenfahrt unter Einwirkung einer Fliehkraft $F_F$ verhält. Dabei wird von einer Rechtskurve ausgegangen, die durch den Pfeil P dargestellt ist. Zum Durchfahren einer Kurve sind Seitenkräfte $F_R$ an den Rädern 12', 13' zur Aufnahme der Massenkraft des Fahrzeugs, das heißt der Fliehkraft $F_F$ notwendig.

Die Seitenkräfte $F_R$ an den Hinterrädern 12', 13' verformen die Radaufhängung derart, dass die in Längsrichtung (L-Achse) orientierten Längslenker 3', 4' der Verbundlenkerachse 2' sich zum momentanen Wendepunkt hin verbiegen. Die Reaktionskräfte führen zum leichten Verschwenken der Längslenker 3', 4' um die Hochachse (H-Achse) des Kraftfahrzeugs was zu einer Verbiegung des Querträgers 5' führt. Durch die Verschwenkung der Längslenker 3', 4' und die Verbiegung der Querträgers 5' verschwenken die Räder 12', 13' in Kurvenrichtung, das heißt es findet eine Selbstlenkung der Hinterräder 12', 13' statt. Hierdurch tritt ein unerwünschtes Übersteuern des Kraftfahrzeugs 14' auf, was sich negativ auf die Fahrstabilität des Kraftfahrzeugs auswirken kann.

In Figur 2a, welche die Verbundlenkerachse in Draufsicht zeigt, ist erkennbar, dass der Längslenker 4' an der Kurveninnenseite des Fahrzeugs 14', der das ausfedernde Rad 13' trägt, sich zum Kurvenmittelpunkt verbiegt, um welchen das Fahrzeug 14' einen Bogen beschreibt. Der dabei entstehende zusätzliche Lenkwinkel $\delta_H$ am Hinterrad addiert sich mit dem Lenkwinkel $\delta_V$ am Vorderrad. Die dabei entstehende Reduktion des Lenkradius führt zum Übersteuern des Kraftfahrzeugs.

In Figur 2b, welche die Verbundlenkerachse 2' in Rückansicht, das heißt in Fahrtrichtung des Kraftfahrzeuges zeigt, ist erkennbar, dass das linke Rad 12', welches beim Durchfahren der Kurve außen liegt, einfedert, während das rechte Rad 13', welches beim Durchfahren der Kurve innen liegt, ausfedert. Dabei rollt das Fahrzeug im Gegenuhrzeigersinn.

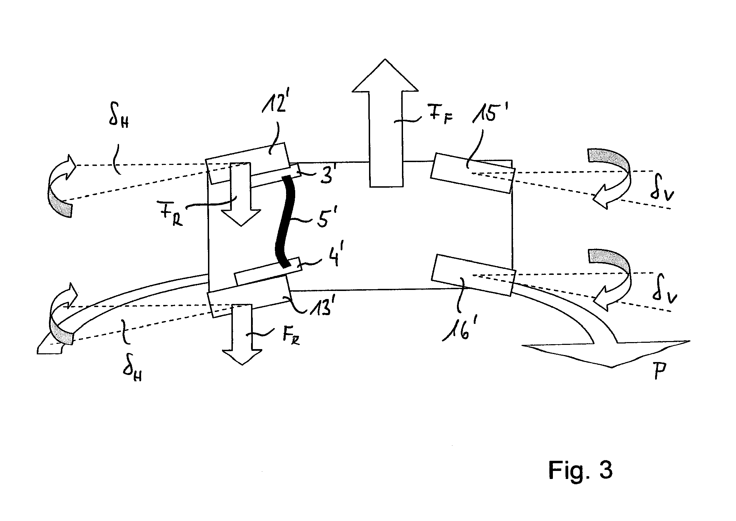

In Figur 3 ist der Zustand des Übersteuerns beim Durchfahren einer Kurve in Pfeilrichtung gezeigt. Das Fahrzeug 14' hat eine Vorderachse, von der die vorderen beiden Räder 15', 16' erkennbar sind. Es ist weiter die Hinterachse des Kraftfahrzeugs 14' mit der Verbundlenkerachse 2' erkennbar. Der Pfeil $F_F$ stellt die Fliehkraft des Kraftfahrzeugs beim Durchfahren der Kurve in Pfeilrichtung P dar. Der Fliehkraft $F_F$ wirken die Reaktionskräfte $F_R$ an den Hinterrädern 12', 13' entgegen. Der Einschlagwinkel der vorderen Räder ist mit $\delta_V$ eingezeichnet. Der sich an der Hinterachse auf Grund der Verbiegung der Aufhängung ergebende Radlenkwinkel ist mit $\delta_H$ eingezeichnet. Es lässt sich also zusammenfassen, dass in Folge der Reaktionskräfte $F_R$ das Verbindungsprofil 5' beziehungsweise der Querträger 5' elastisch verbogen wird. In Folge dieser Biegung des Querträgers 5' tritt ein unerwünschtes Übersteuern des Kraftfahrzeugs ein.

Die Figuren 4a bis 4f zeigen eine erfindungsgemäßen Verbundlenkerachse 2 eines Kraftfahrzeugs mit einem erfindungsgemäßen Querträger 5 in einer ersten Ausführungsform. Der Querträger 5 ist elastisch verformbar. Es ist erkennbar, dass der Querträger 5 eine Struktur aufweist, die schematisch dargestellt ist. Die Struktur ist derart gestaltet, dass eine elastische Torsionsverformung, die beim Durchfahren einer Kurve aufgrund eines um die Torsionsachse wirksamen Torsionsmoments entsteht, eine elastische Biegeverformung des Querträgers 5 bewirkt.

Es sind die Koordinaten des Kraftfahrzeugs mit L für die Längsrichtung, H für die Hochrichtung und Q für die Querrichtung eingezeichnet. Es sind weiter die Koordinaten des Querträgers 5 mit X, Y und Z angegeben. Dabei verläuft die Y-Achse, die koaxial zur Längsachse A2 des Querträgers ist, parallel zur Querrichtung Q des Kraftfahrzeugs. Der Koordinatenursprung liegt im Zentrum des Querträgers 5, das heißt die X-Achse teilt den Querträger 5 in Draufsicht mittig und die Z-Achse teilt den Querträger 5 in Seitenansicht mittig. Eine erste Ebene $E_{ZX}$, welche durch die Z-Achse und die X-Achse aufgespannt wird, verläuft senkrecht zur Längsachse A2 und teilt den Querträger 5 mittig. Eine zweite Ebene $E_{XY}$ wird durch die X-Achse und die Y-Achse aufgespannt. Diese zweite Ebene $E_{XY}$ steht senkrecht zur ersten Ebene $E_{ZX}$ und beinhaltet die Längsachse A2. Eine dritte Ebene $E_{YZ}$ wird durch die Y-Achse und die Z-Achse aufgespannt. Die dritte Ebene $E_{YZ}$ ist senkrecht zur ersten Ebene $E_{ZX}$ und zur zweiten Ebene $E_{XY}$ angeordnet und beinhaltet die Längsachse A2.

In den Figuren 4a bis 4d ist die Verbundlenkerachse 2 mit erstem und zweitem Längslenker 3, 4 und dem die beiden Längslenker 3, 4 miteinander verbindenden Querträger 5 gezeigt. Die beiden Längslenker 3, 4 haben an ihren vorderen Enden 6, 7 Lagerstellen, über welche die Verbundlenkerachse 2 an einem Fahrzeugaufbau um eine Achse A1 schwenkbar gelagert ist. An den hinteren Enden 8, 9 sind an den Längslenkern 3, 4 Achszapfen 10, 11 vorgesehen, an denen jeweils ein Rad 12, 13 gelagert ist.

Bei der vorliegenden Ausführungsform ist der Querträger 5 aus einem anisotropen Material hergestellt, das heißt die Eigenschaften des Werkstoffs unterscheiden sich in Abhängigkeit von der Richtung. Als Werkstoff mit anisotropem Verhalten wird vorliegend ein Faserverbundwerkstoff verwendet, das heißt ein Verbund aus hochfesten Fasern und einem Kunststoff. Es sind schematisch einzelne Fasern 18 der Faserverbundstruktur eingezeichnet. Diese einzelnen Fasern 18 stellen insofern Strukturelemente der gesamten Faserverbundstruktur dar.

Der Querträger 5 ist in Figur 4a in Draufsicht und in Figur 4b in Rückansicht erkennbar. In den Figuren 4c und 4d ist der Querträger vereinfachend mit vier Teilabschnitten 19, 20, 29, 30 dargestellt. Jeder der vier Abschnitte 19, 20, 29, 30 weist mehrere gedachte Schichten auf, von denen hier beispielhaft eine obere Schicht 21 und eine untere Schicht 22 eingezeichnet sind. Die einzelnen Fasern 18 des Querträgers 5 sind so angeordnet, dass sie mehrere parallel zueinander verlaufende Schichten 21, 22 miteinander verbinden. Es ist erkennbar, dass die Struktur des Querträgers 5 zu einer Ebene $E_{XY}$, welche durch die X-Achse und Y-Achse des Querträgers 5 aufgespannt wird, asymmetrisch ist. Hierfür sind einzelnen Fasern 18 bzw. einzelne Strukturelemente in dem Abschnitt 19 und in dem Abschnitt 20 winklig zur Achse A2 des Querträgers bzw. zur Ebene $E_{XY}$ angeordnet. Der Winkel beträgt dabei vorzugsweise zwischen 5° und 45°. Dabei gilt generell, dass die auf Grund einer Torsionsverformung erzeugte Biegeverformung des Querträgers 5 um so größer ist, je größer der zwischen den einzelnen Fasern 8 bzw. Strukturelementen und der Ebene $E_{XY}$ eingeschlossene Winkel ist. In dem oberen Umfangsteilabschnitt, der in Figur 4a erkennbar ist, verlaufen die Fasern quer zur Längsachse A2 und symmetrisch zur Ebene $E_{YZ}$, die durch die Y-Achse und die Z-Achse aufgespannt wird.

Es ist weiter erkennbar, dass die aus Faserverbundwerkstoff gebildete Struktur des Querträgers 5 in Bezug auf eine Mittelebene $E_{ZX}$, die senkrecht zur Längsachse A2 verläuft, symmetrisch gestaltet ist. Insbesondere ist die Struktur in Bezug auf die Mittelebene $E_{ZX}$ spiegelsymmetrisch und etwa V-förmig gestaltet, wobei die strukturbildenden Fasern 18 bzw. Strukturelemente der beiden Halbabschnitte 19, 29; 20, 30 in Richtung der Z-Achse voneinander divergieren. Auf diese Weise wird erreicht, dass bei Einleitung eines Torsionsmoments $M_Y$ in den Querträger 5 um die Längsachse A2 sich jeweils der eine Abschnitt 19 verkürzt, während sich der andere Abschnitt 20 verlängert. Dies geschieht dadurch, dass die einzelnen strukturbildenden Fasern bzw. Strukturelemente 18 eine Kraft in Richtung ihrer Haupterstreckung übertragen und insofern wie Zug- bzw. Druckbalken innerhalb des Querträgers 5 wirken. Bei Einleitung eines Torsionsmoments $M_Y$ in den Querträger 5 um die Längsachse A2 werden, aufgrund ihrer zur Längsachse A2 winkligen Anordnung, eine erste Gruppe der Strukturelemente, auf Zug belastet und dadurch verlängert, während eine zweite Gruppe der Strukturelemente auf Druck belastet und dadurch verkürzt werden. Insgesamt erfährt die eine Seite des Querträgers 5, welche die Abschnitte 19 und 20 umfasst, aufgrund der Hebelwirkung der einzelnen Strukturelemente,

EP 2 418 110 A2

eine etwa C-förmige elastische Biegung relativ zur Mittelebene $E_{ZX}$.

Bei der gegenüberliegenden zweiten Hälfte erfolgt die Längenänderung diametral entgegengesetzt, das heißt, die erste Abschnitt 29 verlängert sich, während sich der zweite Abschnitt 30 verkürzt. Auf diese Weise erfährt diese zweite Seite des Querträgers 5, welche die Abschnitte 29 und 30 umfasst, eine etwa C-förmig elastische Biegung relativ zur Mittelebene $E_{ZX}$, jedoch mit entgegengesetztem Krümmungssinn. Insgesamt ergibt sich bei Einleitung des Torsionsmoments $M_Y$ so eine S-förmige Verformung des Querträgers 5. Dabei ist die S-förmige Verformung des Querträgers 5 zumindest etwa punktsymmetrisch relativ zu einem geometrischen Mittelpunkt des Querträgers 5.

Der verformte Zustand ist in Figur 4d dargestellt. Dabei ist die Verformung gezeigt, wie sie sich beim Durchfahren einer Linkskurve, das heißt in Pfeilrichtung P um den Momentanpol W ergibt. Beim Durchfahren einer Rechtskurve (nicht dargestellt), würde sich zur gezeigten Verformung eine um das Zentrum des Querträgers 5 entsprechend punktsymmetrische Verformung ergeben. Es ist erkennbar, dass der Längslenker 4 des kurvenäußeren einfedernden Rades 12 hoch schwenkt, während der Längslenker 3 des kurveninneren ausfedernden Rades herunter schwenkt. Hierdurch wird von den Längslenkern 3, 4 ein Torsionsmoment $M_Y$ in den Querträger 5 um die Längsachse A2 eingeleitet. Dieses Torsionsmoment $M_Y$ führt zu einer etwa S-förmigen Biegeverformung des Querträgers 5 um die Z-Achse. Dabei ist die Struktur in dem Querträger 5 bzw. den einzelnen Teilabschnitten 19, 20, 29, 30 so gestaltet, dass das durch die Biegeverformung an den Längslenkern 3, 4 erzeugte Biegemoment $M_Z$ vom Momentanpol W weg, das heißt nach außen wirkt. Auf diese Weise wird erreicht, dass die Biegemomente $M_Z$ ein ungewünschtes Eigenlenkverhalten der Hinterräder 12, 13 kompensieren können.

Bei der vorliegenden Ausführungsform ist die Struktur des Querträgers 5 in Ebenen wirksam, die parallel zu einer Ebene liegen, die durch die Hochachse H und die Querachse Q des Kraftfahrzeugs aufgespannt wird. Das heißt die X-Achse des Querträgers 5 ist parallel zur Längsachse L des Kraftfahrzeugs und die Z-Achse des Querträgers 5 ist parallel zur Hochachse H des Kraftfahrzeugs ausgerichtet. In dieser Struktur erzeugt die Verbindung in den zwei gegensinnig orientierten symmetrischen Laminatabschnitten 19, 29; 20, 30 Biegemomente $M_Z$ um die Z-Achse an den Längslenkern 3, 4, entsprechend der H-Achse des Kraftfahrzeugs. Das heißt, durch eine Torsion des Querträgers 5 um die Y-Achse schwenken die einzelnen Strukturelemente, das heißt die Fasern 18 bzw. die Laminate, der wirksamen Deckschichten um zur X-Achse parallele Achsen. Durch dieses Schwenken der Fasern 18 bzw. Laminate verkürzen sich die diametral gegenüberliegenden ersten Schichten 19, 30, während sich die zweiten Schichten 20, 29 eine Längsdehnung erfahren. Auf diese Weise entstehen Biegemomente $M_Z$ um die Z-Achse an den Längslenkern 3, 4, entsprechend der Hochachse H des Kraftfahrzeugs. Dabei gilt bei der vorliegenden Ausrichtung des Querträgers 5 mit zur Hochachse H des Kraftfahrzeugs paralleler Z-Achse, generell, dass die Struktur derart gestaltet ist, dass diese an beiden Längslenkern 3, 4 Biegemomente $M_Z$ erzeugt, welche die Längslenker 3, 4 vom Kurvenmittelpunkt weg beaufschlagen. Diese Biegemomente $M_Z$ wirken der Eigenlenkung der Hinterräder 12, 13 entgegen und verhindern so die Übersteuerung des Fahrzeugs 14.

Die Figuren 4e und 4f zeigen schematisch einen Abschnitt der Struktur des Querträgers 5. Das eingeleitete Torsionsmoment ist mit $M_T$ gekennzeichnet. Es bewirkt eine Torsion der beiden dargestellten Schichten 19, 20 um die Y-Achse. Dabei werden die Strukturelemente 18 der Schicht 19 geringfügig elastisch verkürzt, während die Strukturelemente 18 der Schicht 20 geringfügig elastisch verlängert werden. Dies führt insgesamt zu der gewünschten S-förmigen Verformung des Querträgers 5, wie sie schematisch in Figur 4d dargestellt ist. Der dargestellte symmetrische Aufbau des Faserverbundes führt zu der gewünschten Biege-Torsionskopplung. Bei entgegengesetzt gerichtetem Torsionsmoment wäre die Verformung des Querträgers 5 zu der gezeigten Verformung punktsymmetrisch um den Mittelpunkt.

In den Figuren 5a und 5b ist eine erfindungsgemäße Verbundlenkerachse 2 in einer weiteren Ausführungsform dargestellt. Diese entspricht hinsichtlich des Aufbaus und der Funktionsweise weitestgehend der Ausführungsform nach Figur 4, so dass hinsichtlich der Gemeinsamkeiten auf die obige Beschreibung Bezug genommen werden kann.

Der Querträger 5 der vorliegenden Ausführungsform ist identisch mit dem Querträger der Ausführungsform gemäß Figur 4. Der einzige Unterschied besteht darin, dass der Querträger vorliegend um 90° verdreht gegenüber den Längslenkern 3, 4 angeordnet und mit diesen verbunden ist. Das heißt, die Struktur des Querträgers 5 ist in einer Horizontalebene wirksam angeordnet, und zwar in einer Ebene die durch die Längsachse L und die Querachse Q des Kraftfahrzeugs aufgespannt wird. Mit anderen Worten verläuft die X-Achse des Querträgers 5 in Hochrichtung des Kraftfahrzeugs und die Z-Achse des Querträgers verläuft in Längsrichtung des Kraftfahrzeugs. Es ist erkennbar, dass die Struktur in Bezug auf die Mittelebene $E_{ZX}$ spiegelsymmetrisch und etwa V-förmig gestaltet ist, wobei die strukturbildenden Fasern 18 bzw. die Strukturelemente der beiden Halbabschnitte 19, 29; 20, 30 in Richtung der Z-Achse voneinander divergieren.

Die Verbindung in den zwei gegensinnig orientierten symmetrischen Laminatabschnitten 19, 29; 20, 30 erzeugt somit Biegemomente um die Z-Achse. Dies bewirkt, dass an den Längslenkern 3, 4 Biegemomente um die Längsachse L des Kraftfahrzeugs erzeugt werden. Dabei ist die Struktur in dem Querträger 5 bzw. den einzelnen Teilabschnitten 19, 20, 29, 30 so gestaltet, dass das durch die Biegeverformung an den Längslenkern 3, 4 erzeugte Biegemoment $M_Z$ der Wankbewegung des Kraftfahrzeugs entgegenwirkt. Auf diese Weise wird erreicht, dass die Biegemomente $M_Z$ einen ungewünschten Sturzwinkel $\varepsilon$ der Räder 12, 13 kompensieren können, der beim Durchfahren einer Kurve entsteht.

In den Figuren 6a, 6b und 6c ist eine erfindungsgemäße Verbundlenkerachse 2 in einer weiteren Ausführungsform dargestellt. Diese entspricht hinsichtlich des Aufbaus und der Funktionsweise weitestgehend den Ausführungsformen nach Figur 4 und Figur 5, so dass hinsichtlich der Gemeinsamkeiten auf die obige Beschreibung Bezug genommen werden kann.

Der Querträger 5 der vorliegenden Ausführungsform ist identisch mit dem Querträger der Ausführungsform gemäß Figur 4 und der Ausführungsform gemäß Figur 5. Der einzige Unterschied besteht darin, dass der Querträger 5 vorliegend um 45° verdreht gegenüber den Längslenkern 3, 4 angeordnet und mit diesen verbunden ist, das heißt die X-Achse und Z-Achse des Querträgers liegen jeweils auf Winkelhalbierenden zwischen der Längsachse L und der Hochachse H des Kraftfahrzeugs. Durch diese Anordnung hat die für die Biege-Torsions-Kopplung verantwortliche Struktur des Querträgers 5 eine Wirkkomponente in Längsrichtung des Kraftfahrzeugs und eine Wirkkomponente in Hochrichtung des Kraftfahrzeugs. Es ist erkennbar, dass die Struktur in Bezug auf die Mittelebene $E_{ZX}$ spiegelsymmetrisch und etwa V-förmig gestaltet ist, wobei die strukturbildenden Fasern 18 bzw. die Strukturelemente der beiden Halbabschnitte 19, 29; 20, 30 in Richtung der Z-Achse voneinander divergieren.

Die Verbindung in den zwei gegensinnig orientierten symmetrischen Laminatabschnitten 19, 29; 20, 30 erzeugt somit Biegemomente $M_Z$ um die Z-Achse an den Längslenkern 3, 4. Dies bewirkt, dass an den Längslenkern 3, 4 Biegemomente um die Längsachse L des Kraftfahrzeugs und um die Hochachse H des Kraftfahrzeugs erzeugt werden. Dabei gilt bei der vorliegenden Ausrichtung des Querträgers 5 mit zur Hochachse H des Kraftfahrzeugs winklig verlaufender Z-Achse, generell, dass die Struktur derart gestaltet ist, dass diese an beiden Längslenkern 3, 4 Biegemomente $M_Z$ erzeugt, welche die Längslenker 3, 4 vom Momentanpol W weg beaufschlagen und welche der Wankbewegung des Kraftfahrzeugs entgegenwirken. Das Beaufschlagen der Längslenker 3, 4 in Richtung Kurvenäußeres wirkt der Eigenlenkung der Hinterräder 12, 13 entgegen und verhindert so ein Übersteuern des Fahrzeugs 14. Das Entgegenwirken der Wankbewegung hat eine Kompensation des Sturzwinkels ε der Räder 12, 13 zur Folge.

Die Anordnung des Querträgers 5 mit seiner wirksamen Struktur gemäß der Ausführungsform nach Figur 6 ermöglicht eine Kopplung zwischen Torsion und Biegung des Querträgers 5 um die Längsachse L und Hochachse H des Fahrzeugs. Hiermit können folglich Lenkwinkel und Sturzwinkel ausgeglichen werden. Es versteht sich, dass die wirksame Struktur des Querträgers 5 auch in einer anderen Ebene als in einer zur Horizontalebene um 45° verdrehten Ebene angeordnet sein kann. Beliebige Winkel sind hier vorstellbar, je nachdem ob die Struktur des Querträgers 5 eher der Eigenlenkung oder eher dem Sturzwinkel entgegenwirken soll.

Die Figuren 7 bis 9 zeigen unterschiedliche Ausführungsformen, wie die Struktur des aus Faserverbundwerkstoff hergestellten Querträgers 5 gestaltet sein kann.

Die Figuren 7a und 7b zeigen eine Faserverbundstruktur, die aus Rowings oder Strängen oder einem unidirektional wirkenden Werkstoff herstellbar ist. Figur 7a zeigt schematisch einen mittleren Abschnitt des Querträgers 5. Es ist erkennbar, dass dieser im Querschnitt betrachtet ein geschlossenes Profil aufweist. Die Fasern werden um einen Grundkörper so gewickelt, dass sie in ersten einander gegenüberliegenden Umfangsabschnitten U1, U2 winklig zur Längsachse A2 unter Ausbildung eines spitzen Winkels verlaufen, und dass sie in zweiten Umfangsabschnitten U3, U4 etwa parallel zur Mittelebene $E_{ZX}$ verlaufen. Durch die winklige Anordnung der strukturgebenden bzw. wirksamen Fasern (Strukturelementen) in den Umfangsabschnitten U1, U2 wird die gewünschte Kopplung zwischen Torsion und Biegung erreicht. Figur 7b zeigt ein Rowing, das zur Erzeugung einer Faserverbundstruktur gemäß Figur 7a verwendet werden kann, in Draufsicht.

Die Figuren 8a und 8b zeigen eine Faserverbundstruktur, die aus Gewebe 32 oder Gestricke herstellbar ist. Figur 8a zeigt schematisch einen mittleren Abschnitt des Querträgers 5. Es ist erkennbar, dass dieser im Querschnitt betrachtet ein offenes, etwa C-förmiges Profil aufweist. Eine Abwicklung des Gewebes 32 in ungeformtem Zustand ist in Figur 8b gezeigt. Das Gewebe 32 weist zwei Umfangsabschnitte U1 und U2 auf, in denen die strukturgebenden bzw. wirksamen Fasern 18, 18' (Strukturelemente) winklig zur Längsachse A2 angeordnet sind, und einen die beiden Umfangsabschnitte U1 und U2 miteinander verbindenden Umfangsabschnitt U3 auf, in dem die wirksamen Fasern quer zur Längsachse A2 verlaufen. Durch die winklige Anordnung der strukturgebenden Fasern 18, 18' (Strukturelemente) in den Umfangsabschnitten U1 und U2 wird die gewünschte Kopplung zwischen Torsion und Biegung erreicht.

Die Figuren 9a und 9b zeigen eine Faserverbundstruktur, die aus Laminaten 33 herstellbar ist. Figur 9a zeigt schematisch einen Endabschnitt des Querträgers 5. Es ist erkennbar, dass dieser im Querschnitt betrachtet ein semi-geschlossenes, etwa C-förmiges Profil aufweist. Zur Erzeugung eines solchen semi-geschlossenen Profils wird ein geschlossenes Profil seitlich eingeformt, so dass eine längliche Ausnehmung entsteht. Insofern stellt die Ausführungsform nach Figur 9 eine Kombinatioin der Ausführungsformen nach Figur 7 und Figur 8 dar. Das semi-geschlossene Profil kann durch einzelne aufeinander geschichtete Laminate erzeugt werden, die eine entsprechend winklig zur Längsachse A2 wirksame Faserstruktur bzw. Strukturelemente aufweisen. Durch die winklige Anordnung der wirksamen Fasern (Strukturelemente) in den Umfangsabschnitten U1 und U2 wird die gewünschte Kopplung zwischen Torsion und Biegung erreicht.

Die Figuren 10a und 10b zeigen einen erfindungsgemäßen Querträger 5 in einer weiteren Ausführungsform, welche hinsichtlich seiner Funktionsweise dem Querträger gemäß der Figur 4. Insofern wird diesbezüglich auf die obige Beschreibung Bezug genommen. Dabei sind gleiche beziehungsweise entsprechende Bauteile mit gleichen Bezugsziffern versehen.

Es sind die Koordinaten des Querträgers 5 mit X, Y und Z und die hiervon aufgespannten Ebenen mit $E_{XY}$, $E_{ZX}$ und $E_{YZ}$ angegeben. Dabei verläuft die Y-Achse, die koaxial zur Längsachse A2 des Querträgers ist, parallel zur Querrichtung Q des Kraftfahrzeugs. Der Koordinatenursprung liegt im Zentrum des Querträgers 5, das heißt die X-Achse teilt den Querträger 5 in Draufsicht mittig und die Z-Achse teilt den Querträger 5 in Seitenansicht mittig. Der Querträger 5 ist an seinen Enden jeweils mit einem Längslenker 3, 4 verbunden und bildet gemeinsam mit diesem einen erfindungsgemäße Verbundlenkerachse 2. Figur 10a zeigt die erfindungsgemäße Verbundlenkerachse 2 in unbelastetem Zustand. Figur 10b zeigt die Verbundlenkerachse 5 in verformtem Zustand auf Grund Einleitung eines Torsionsmoments $M_Y$, das beim Durchfahren einer Kurve von den Längslenkern 3, 4 auf den Querträger 5 einwirkt. Dabei wird vorliegend von einer Linkskurve des Kraftfahrzeugs in Pfeilrichtung P um den Momentanpol W ausgegangen.

Der Querträger 5 gemäß der vorliegenden zweiten Ausführungsform besteht aus einem isotropen Werkstoff, insbesondere aus einem Stahlwerkstoff. Die gewünschte Struktur des Querträgers 5 wird bei dieser Ausführungsform konstruktiv gelöst, das heißt durch entsprechende Ausgestaltung und Anordnung einzelner Elemente, was im folgenden näher beschrieben wird.

Der erfindungsgemäße Querträger 5 umfasst ein erstes längliches Element 21, ein zweites längliches Element 22 und ein dazwischen liegendes drittes längliches Element 23. Die länglichen Elemente 21, 22, 23 die auch als Längsprofile bezeichnet werden können, erstrecken sich über die gesamte Länge des Querträgers 2. Es ist erkennbar, dass das erste Längsprofil 21 und das zweite Längsprofil 22 parallel zueinander mit Abstand angeordnet sind. Die beiden ersten und zweiten Längsprofile 21, 22 sind gerade gestaltet. Zwischen dem ersten und dem zweiten Längsprofil 21, 22 ist das dritte Längsprofil 23 angeordnet, welches einen gekrümmten Verlauf hat. Das dritte Längsprofil 23 hat eine größere Dicke als das erste und das zweite Längsprofil 21, 22. Alle Längsprofile 21, 22, 23 sind aus Flachmaterial hergestellt.

Es ist erkennbar, dass der Querträger 5, beziehungsweise das dritte Längsprofil 23 symmetrisch zu der Mittelebene $E_{ZX}$ gestaltet ist, die senkrecht auf der Längsachse A2 des Querträgers 2 steht und mittig durch den Querträger 5 verläuft. Das dritte Längsprofil 23, welches auf Grund seiner Anordnung zwischen dem oberen und dem unteren Längsprofil 21, 22 auch als Zwischenelement bezeichnet werden kann, ist wellenförmig gestaltet und umfasst zwei absolute Maxima und ein dazwischen liegendes absolutes Minimum. Im Bereich der absoluten Maxima 24, 25 ist das Zwischenelement 23 mit dem oberen Längsprofil 21 verbunden. Im Bereich des absoluten Minimums 26, das in Bezug auf die Länge des Zwischenelements 23 genau mittig liegt, ist das Zwischenelement 23 mit dem unteren Längsprofil 22 verbunden beziehungsweise gegenüber diesem abgestützt.

Zwischen dem absoluten Minimum 26 und dem absoluten Maxima 24, 25 hat das Zwischenelement 23 jeweils einen Übergangsabschnitt 27, 28. Die beiden Übergangsabschnitte 27, 28 verlaufen winklig zur Längsachse A2 des Querträgers 2 und schließen mit dieser einen spitzen Winkel $\alpha$ ein. Sie bilden insofern Strukturelemente zur Torsions-Biege-Kopplung. Der Winkel $\alpha$ kann zwischen 0° und 45° betragen und liegt vorzugsweise bei 10° bis 35°. Dabei gilt grundsätzlich, dass je größer der Winkel zwischen dem Zwischenelement 23 und der Längsachse A2 ist, desto größer ist auch die Biegeverformung des Querträgers 2 bei Einleitung eines Torsionsmoments. Es ist weiter erkennbar, dass die Struktur des Querträgers 2, die durch die drei Längsprofile 21, 22, 23 gebildet wird in Bezug auf eine zweite Ebene $E_{XY}$, welche durch die Schwenkachse A1 und die Längsachse A2 des Querträgers 2 aufgespannt wird, unsymmetrisch verläuft.

Durch die Struktur des Querträgers 5, bei der zwei Längsprofile 21, 22 über ein oder mehrere Zwischenprofile 23 miteinander verbunden bzw. aneinander gekoppelt sind, erfolgt bei Einleitung eines Torsionsmoments in den Querträger 5 eine Verbiegung desselben. Dies geschieht dadurch, dass das Zwischenprofil 23 eine Kraft in Richtung seiner Haupterstreckung überträgt und insofern wie ein Zug- bzw. Druckbalken zwischen den außenliegenden Längsprofilen 21, 22 wirkt. Bei Einleitung eines Torsionsmoments $M_Y$ in den Querträger 5 um die Längsachse A2 wird, aufgrund der zur Längsachse A2 winkligen Anordnung, ein erster Abschnitt des Zwischenprofils 23 auf Zug belastet und dadurch verlängert (vorliegend der rechte Abschnitt), während der zweite Abschnitt des Zwischenprofils 23 auf Druck belastet und dadurch verkürzt wird (vorliegend der linke Abschnitt). Insgesamt erfährt die eine Hälfte des Querträgers 5, aufgrund der Hebelwirkung des Zwischenprofils 23, eine etwa C-förmige elastische Biegung relativ zur Mittelebene $E_{ZX}$. in einem ersten Krümmungssinn, während die andere Hälfte des Querträgers in entgegengesetztem Krümmungssinn elastisch gebogen wird, so dass sich insgesamt eine etwa S-förmige elastische Biegung ergibt.

Bei der vorliegenden Ausführungsform sind die Elemente 21, 22, 23 so angeordnet, dass die aus den Elementen 21, 22, 23 gebildete Struktur in einer Horizontalebene wirksam ist. Ähnlich wie bei der Ausführungsform aus Faserverbundwerkstoff gemäß Figur 4 wird durch das Zwischenelement 23 eine etwa V-förmige Anordnung bei Rückansicht bzw. Frontansicht, das heißt in Richtung X-Achse, erzeugt. Auf diese Weise wird erreicht, dass bei Einleitung eines Torsionsmoments $M_Y$ in den Querträger 5 um die Längsachse A2 sich ein Halbabschnitt des Querträgers 5 verkürzt, während sich der andere Halbabschnitt verlängert. Bei der gegenüberliegenden zweiten Hälfte erfolgt die Längenänderung diametral entgegengesetzt. Die Kopplung zwischen dem Zwischenelement 23 und dem oberen und unteren Element 21, 22 erzeugt Biegemomente $M_Z$ um die Z-Achse an den Längslenkern 3, 4. Diese Biegemomente $M_Z$ kompensieren den Lenkwinkels $\delta_H$ an den Hinterrädern 12, 13 und verhindern so die Übersteuerung des Fahrzeugs 14.

Die Biegeverformung, welche bei Einleitung eines Torsionsmoments $M_Y$ um die Längsachse A2 entsteht, ist in Figur 10b gezeigt. Dabei ist vorliegend der Fall dargestellt, welcher beim Durchfahren einer Linkskurve entstehen würde, das heißt in Pfeilrichtung P. Das am kurvenäußeren Längslenker 4 befestigte Rad (nicht dargestellt) würde einfedern, während das am kurveninneren Längsträger 3 liegende Rad (nicht dargestellt) ausfedern würde. Die Verbiegung des Querträgers 5, welche etwa S-förmig ist, führt dazu, dass sich der kurvenäußere Längslenker 4 zur Außenseite des Fahrzeugs verbiegt. Der Längslenker 9 an der Kurveninnenseite des Fahrzeugs verbiegt sich in Richtung Mittelebene $E_{ZX}$.

Diese beschriebene Verformung des Querträgers 5 beziehungsweise der damit verbundenen Längslenker 3, 4 wirken der Verformung, welche beim Durchfahren der Kurve entsteht, entgegen. Auf diese Weise kann ein Übersteuern des Kraftfahrzeugs bei Kurvenfahrt verhindert werden.

In den Figuren 11a und 11b ist eine erfindungsgemäße Verbundlenkerachse 2 in einer weiteren Ausführungsform schematisch dargestellt. Diese entspricht hinsichtlich des Aufbaus und der Funktionsweise weitestgehend der Ausführungsform nach Figur 10, so dass hinsichtlich der Gemeinsamkeiten auf die obige Beschreibung Bezug genommen werden kann. Der einzige Unterschied der vorliegenden Ausführungsform gemäß Figur 11 besteht darin, dass das Zwischenelement 23 aus geraden Teilabschnitten besteht, die jeweils winklig zur Längsachse A2 verlaufen und mit den oberen und unteren geraden Elementen 21, 22 verbunden sind. Mit der vorliegenden Anordnung der Struktur des Querträgers 5 werden bei Einleitung eines Torsionsmoments $M_Y$ von den Längslenkern 3, 4 auf den Querträger 5 Biegemomente $M_Z$ um die Z-Achse an den Längslenkern 3, 4 erzeugt. Diese Biegemomente $M_Z$ kompensieren den Lenkwinkels $\delta_H$ an den Hinterrädern 12, 13 und verhindern so die Übersteuerung des Fahrzeugs 14.

In den Figuren 12a und 12b ist eine erfindungsgemäße Verbundlenkerachse 2 mit einem erfindungsgemäßen Querträger 5 in einer weiteren Ausführungsform schematisch dargestellt. Diese entspricht hinsichtlich Aufbau und Funktionsweise in weiten Teilen der Ausführungsform nach Figur 11, so dass hinsichtlich der Gemeinsamkeiten auf die obige Beschreibung Bezug genommen werden kann. Dabei sind gleiche bzw. einander entsprechende Bauteile mit gleichen Bezugszeichen versehen.

Der Querträger 5 der vorliegenden Ausführungsform ist identisch mit dem Querträger der Ausführungsform gemäß Figur 11. Der einzige Unterschied besteht darin, dass der Querträger 5 bei der vorliegenden Ausführungsform nach Figur 12 um 90° verdreht gegenüber den Längslenkern 3, 4 angeordnet und mit diesen verbunden ist. Das heißt, die Struktur des Querträgers 5 ist in einer Horizontalebene wirksam angeordnet, und zwar in einer Ebene die durch die Längsachse L und die Querachse Q des Kraftfahrzeugs aufgespannt wird. Mit anderen Worten verläuft die X-Achse des Querträgers 5 in Hochrichtung des Kraftfahrzeugs und die Z-Achse des Querträgers verläuft in Längsrichtung des Kraftfahrzeugs.

Die Kopplung der oberen und unteren Elemente 21, 22 mittels des Zwischenelements 23 erzeugt Biegemomente um die Z-Achse an den Längslenkern 3, 4. Dies bewirkt, dass an den Längslenkern 3, 4 Biegemomente um die Längsachse L des Kraftfahrzeugs erzeugt werden. Dabei ist die Struktur des Querträgers 5 bzw. der Elementen 21, 22, 23 so gestaltet, dass das durch die Biegeverformung an den Längslenkern 3, 4 erzeugte Biegemoment $M_Z$ der Wankbewegung des Kraftfahrzeugs entgegenwirkt. Auf diese Weise wird erreicht, dass die Biegemomente $M_Z$ einen ungewünschten Sturzwinkel $\varepsilon$ der Räder 12, 13 kompensieren, der beim Durchfahren einer Kurve entsteht. Insofern ist die vorliegende Ausführungsform gemäß Figur 12 hinsichtlich der Wirkungsweise mit der Ausführungsform gemäß Figur 5 vergleichbar, auf deren Beschreibung insofern verwiesen werden kann.

In den Figuren 13a, 13b und 13c ist eine erfindungsgemäße Verbundlenkerachse 2 in einer weiteren Ausführungsform dargestellt. Diese entspricht hinsichtlich des Aufbaus und der Funktionsweise weitestgehend den Ausführungsformen nach Figur 11 und Figur 12, so dass hinsichtlich der Gemeinsamkeiten auf die obige Beschreibung Bezug genommen werden kann.

Der Querträger 5 der vorliegenden Ausführungsform ist identisch mit dem Querträger der Ausführungsform gemäß den Figuren 11 und 12. Der einzige Unterschied besteht darin, dass der Querträger 5 vorliegend um 45° verdreht gegenüber den Längslenkern 3, 4 angeordnet und mit diesen verbunden ist. Das heißt, die X-Achse und Z-Achse des Querträgers liegen jeweils auf Winkelhalbierenden zwischen der Längsachse L und der Hochachse H des Kraftfahrzeugs. Durch diese Anordnung hat die für die Biege-Torsions-Kopplung verantwortliche Struktur des Querträgers 5 eine Wirkkomponente in Längsrichtung des Kraftfahrzeugs und eine Wirkkomponente in Hochrichtung des Kraftfahrzeugs.

Die Kopplung der oberen und unteren Elemente 21, 22 mittels des Zwischenelements 23 erzeugt Biegemomente $M_Z$ um die Z-Achse an den Längslenkern 3, 4. Dies bewirkt, dass an den Längslenkern 3, 4 Biegemomente um die Längsachse L des Kraftfahrzeugs und um die Hochachse H des Kraftfahrzeugs erzeugt werden. Dabei gilt bei der vorliegenden Ausrichtung des Querträgers 5 mit zur Hochachse H des Kraftfahrzeugs winklig verlaufender Z-Achse, generell, dass die Struktur derart gestaltet ist, dass diese an beiden Längslenkern 3, 4 Biegemomente $M_Z$ erzeugt, welche die Längslenker 3, 4 vom Momentanpol W weg beaufschlagen und welche der Wankbewegung des Kraftfahrzeugs entgegenwirken. Das Beaufschlagen der Längslenker 3, 4 in Richtung Kurvenäußeres wirkt der Eigenlenkung der Hinterräder 12, 13 entgegen und verhindert so ein Übersteuern des Fahrzeugs 14. Das Entgegenwirken der Wankbewegung hat eine Kompensation des Sturzwinkels ε der Räder 12, 13 zur Folge. Die vorliegende Ausführungsform gemäß Figur 13 ist somit hinsichtlich der Wirkungsweise mit der Ausführungsform gemäß Figur 6 vergleichbar, auf deren Beschreibung insofern verwiesen werden kann.

Es versteht sich, dass die wirksame Struktur des Querträgers 5 auch in einer anderen Ebene als in einer zur Horizontalebene um 45° verdrehten Ebene angeordnet sein kann. Beliebige Winkel sind hier vorstellbar, je nachdem ob die Struktur des Querträgers 5 eher der Eigenlenkung oder eher dem Sturzwinkel entgegenwirken soll.

Die Figuren 14a und 14b zeigen einen erfindungsgemäßen Querträger 5 in einer weiteren Ausführungsform. Dieser bildet zusammen mit den hiermit befestigten Längslenkern 3, 4 eine erfindungsgemäße Verbundlenkerachse 2. Die vorliegende Ausführungsform entspricht hinsichtlich Aufbau und Funktionsweise weitestgehend derjenigen gemäß den Figuren 10a und 10b, so dass hinsichtlich der Gemeinsamkeiten auf die obige Beschreibung Bezug genommen werden kann. Dabei sind gleiche beziehungsweise einander entsprechende Bauteile mit gleichen Bezugsziffern versehen.

Die Besonderheit der vorliegenden Ausführungsform besteht darin, dass zwischen dem oberen und dem unteren Längsprofil 21, 22 zwei gekrümmte Zwischenelemente 23, 23' vorgesehen sind. Die Zwischenelemente 23, 23' sind vom Aufbau her ähnlich. Sie weisen jeweils zwei absolute Maxima 24, 25 und ein dazwischen liegendes absolutes Minimum 26 auf. Das obere Zwischenelement ist im Bereich seiner absoluten Maxima 24, 25 gegen das obere Längsprofil 21 abgestützt und im Bereich seines absoluten Minimums 26 gegen das zweite Zwischenelement 23' abgestützt bzw. mit diesem verbunden. Das zweite Zwischenelement 23' ist wiederum mit seinen beiden absoluten Maxima 24' 25' gegen eine Unterseite des ersten Zwischenelements 23 abgestützt und im Bereich seines absoluten Minimums 26' gegen das untere Längsprofil 22 abgestützt bzw. mit diesem verbunden. Es ist erkennbar, dass ein zentraler Abschnitt des ersten Zwischenelements 23, welcher das absolute Minimum 26 beinhaltet, kürzer ist als ein entsprechender zentraler Abschnitt 26' des zweiten Zwischenelements 23'. Weiter sind die Übergangsabschnitte 27, 28 des ersten Zwischenelements 23 flacher ausgebildet als die Übergangsabschnitte 27', 28' des zweiten Zwischenelements 23', welche demgegenüber steiler sind. Im bereich der Übergangsabschnitte ist zwischen dem ersten Zwischenelement 23 und dem zweiten Zwischenelement 23' jeweils ein Spalt 28, 29 gebildet.

Die Funktionsweise der vorliegenden Ausführungsform entspricht derjenigen gemäß Figur 10. Durch die Verwendung mehrerer Zwischenelemente 23, 23' ergibt sich bei gleichem eingeleiteten Torsionsmoment $M_Y$ eine größere Biegeverformung des Querträgers 5. Dabei ist die durch die Elemente 21, 22, 23, 23' gebildete Struktur des Querträgers 5 so gestaltet, dass das durch die Biegeverformung an den Längslenkern 3, 4 erzeugte Biegemoment $M_Z$ vom Momentanpol W weg, das heißt nach außen wirkt. Auf diese Weise wird erreicht, dass die Biegemomente $M_Z$ ein ungewünschtes Eigenlenkverhalten der Hinterräder 12, 13 kompensieren können. Es versteht sich, dass auch mehr als zwei Zwischenelemente 23, 23', beispielsweise drei, vier oder mehr, zwischen dem oberen und dem unteren Längsprofil 21, 22 eingesetzt werden können. Damit würde sich die Biegeverformung bei gleichem eingeleitetem Torsionsmoment $M_Y$ nochmals erhöhen.

Die Figuren 15a und 15b zeigen einen erfindungsgemäßen Querträger 5 in einer weiteren Ausführungsform. Dieser bildet zusammen mit den daran befestigten Längslenkern 3, 4 eine erfindungsgemäße Verbundlenkerachse 2. Die vorliegende Ausführungsform entspricht hinsichtlich der Funktionsweise weitestgehend derjenigen gemäß den Figuren 10a und 10b bzw. den Figuren 4a bis 4d, so dass hinsichtlich der Gemeinsamkeiten auf die obige Beschreibung Bezug genommen werden kann. Dabei sind gleiche beziehungsweise einander entsprechende Bauteile mit gleichen Bezugsziffern versehen.

Der vorliegende Querträger 5 ist aus einem anisotropen Werkstoff hergestellt, insbesondere einem Faserverbundwerkstoff. Dies ist durch die Faserstruktur 18, 18', 31 an den Enden des Querträgers 5 angedeutet. Der vorliegende Querträgers 5 bildet im Querschnitt ein U- bildet, wobei die Öffnung nach unten gerichtet ist. Der Querträger 5 hat drei Umfangsteilabschnitte U1, U2 und U3, die auch als Schenkel bezeichnet werden können. Die Struktur ist dabei so gestaltet dass im Bereich der Umfangsteilabschnitte U1 und U2 strukturgebenden Fasern bzw. Faserabschnitte 18, 18' (Strukturelemente) vorgesehen sind, die winklig zur Längsachse A2 des Querträgers und spiegelsymmetrisch zur Mittelebene $E_{XZ}$ ausgerichtet sind. Demgegenüber sind die Fasern bzw. Faserabschnitte 31 im mittleren Umfangsteilabschnitt U3 etwa senkrecht zur Längsachse A2 ausgerichtet. Bei Einleitung eines Torsionsmoments $M_Y$ in den Querträger 5 um die Längsachse A2, was durch gegenläufiges Verschwenken der Längslenker 3, 4 beim Einfedern des kurvenäußeren Rades bzw. beim Ausfedern des kurveninneren Rades geschieht, werden die beiden seitlichen Schenkel U1 und U2 gegeneinander verschoben. Hierdurch werden an den Längslenkern 3, 4 Biegemomente $M_Z$ um die Z-Achse erzeugt. Diese Biegemomente $M_Z$ kompensieren den Lenkwinkels $\delta_H$ an den Hinterrädern 12, 13 und verhindern so die Übersteuerung des Fahrzeugs 14.

In Figur 15a sind weiter die Lagerstellen 10, 11 an den hinteren Enden 8, 9 der Längslenker erkennbar. Die Aufhängung der Verbundlenkerachse 2 erfolgt an den vorderen Enden 6, 7 der Längslenker 3, 4. Es besteht eine weitere Besonderheit der vorliegenden Ausführungsform darin, dass die Längsachse A2 des Querträgers und die Schwenkachse A1 der Verbundlenkerachse zumindest etwa zusammenfallen. Selbstverständlich ist auch eine Ausgestaltung derart denkbar, dass die Längsachse A2 des Querträgers und die Schwenkachse A1, um welche die Verbundlenkerachse 2 an der Fahrzeugkarosserie gelagert ist, parallel versetzt zueinander angeordnet sind. Ebenso ist es denkbar, dass bei allen obengenannten erfindungsgemäßen Ausführungsformen die Längsachse A2 des Querträgers und die Schwenkachse A1 des Verbundlenkers 2 zumindest aneinander angenähert sind oder zusammenfallen.

Figur 16 zeigt einen erfindungsgemäßen Querträger 5 in einer weiteren Ausführungsform. Dieser bildet zusammen mit den daran befestigten Längslenkern 3, 4 eine erfindungsgemäße Verbundlenkerachse 2. Die vorliegende Ausführungsform entspricht hinsichtlich dem Aufbau und der der Funktionsweise weitestgehend derjenigen gemäß den Figuren 15a und 15b, so dass hinsichtlich der Gemeinsamkeiten auf die obige Beschreibung Bezug genommen werden kann. Dabei sind gleiche beziehungsweise einander entsprechende Bauteile mit gleichen Bezugsziffern versehen.

Der Querträger 5 gemäß Figur 16 ist ebenfalls aus einem anisotropen Werkstoff hergestellt, insbesondere einem Faserverbundwerkstoff. Dies ist durch die Gewebestruktur 33 an den Enden des Querträgers 5 angedeutet. Insofern ähnelt der vorliegende Querträger 5 dem in den Figuren 9a und 9b dargestellten. Die Struktur des Gewebes 33 ist so angeordnet dass stärkere Hauptfasern mit zumindest etwa gleicher Orientierung und jeweils mit spitzem Winkel zur Längsachse A2 verlaufen. Nebenfasern mit geringerer Festigkeit können winklig zur Längsachse A2 die Hauptfasern schneidend angeordnet sein. Die Hauptfasern bilden die Strukturelemente, welche die Torions-Biege-Kopplung bei Einleitung eines Torsionsmoments $M_Y$ um die Längsachse A2 erzeugen. Auch bei der vorliegenden Ausführungsform werden an den Längslenkern 3, 4 Biegemomente $M_Z$ um die Z-Achse erzeugt, welche den Lenkwinkels $\delta_H$ an den Hinterrädern 12, 13 aufgrund Eigenlenkung kompensieren. Figur 17 zeigt einen erfindungsgemäßen Querträger 5 in einer weiteren Ausführungsform. Dieser bildet zusammen mit den daran befestigten Längslenkern 3, 4 eine erfindungsgemäße Verbundlenkerachse 2. Die vorliegende Ausführungsform entspricht hinsichtlich dem Aufbau und der der Funktionsweise weitestgehend derjenigen gemäß den Figuren 15a und 15b bzw. Figur 16, so dass hinsichtlich der Gemeinsamkeiten auf die obige Beschreibung Bezug genommen werden kann. Dabei sind gleiche beziehungsweise einander entsprechende Bauteile mit gleichen Bezugsziffern versehen.

Der vorliegende Querträger 5 hat, wie die Ausführungsform gemäß Figur 15 bzw. Figur 16, im Querschnitt betrachtet ein U-förmiges Profil, das im Einbauzustand nach unten hin offen ist. Die Besonderheit liegt darin, dass der Querträger 5 in Seitenansicht nach oben gewölbt ist. Auf diese Weise entsteht eine Art Brückenform. Der mittlere Abschnitt 35 des Querträgers 5 weist von der Längsachse A2 einen größeren Abstand auf, als die endseitigen Abschnitte 36, 37. Der Querträger 5 umfasst vorliegend zwei gerade Abschnitte, die jeweils mit der Längsachse A2 einen spitzen Winkel $\gamma$ einschließen. Grundsätzlich ist es auch denkbar, dass der Querträger 5 einen insgesamt gekrümmten Verlauf aufweist, anstelle zweier gerader Abschnitte. Die brückenartige Form des Querträgers 2 erhöht gegenüber der Ausführungsform mit geradem Querträger die erzeugbare Biegeverformung bei gleichem eingeleitetem Torsionsmoment. Auch bei der vorliegenden Ausführungsform werden an den Längslenkern 3, 4 Biegemomente $M_Z$ um die Z-Achse erzeugt, welche den Lenkwinkeln $\delta_H$ an den Hinterrädern 12, 13 aufgrund Eigenlenkung entgegenwirken.

Der Querträger gemäß Figur 17 kann aus einem isotropen Werkstoff, insbesondere einem Stahlwerkstoff, oder einem anisotropen Werkstoff, insbesondere einem Faserverbundwerkstoff hergestellt werden. Bei Verwendung eines Faserverbundwerkstoffs ist die Struktur des Gewebes 33 so anzuordnen, dass untereinander gleich orientierte stärkere Hauptfasern mit spitzem Winkel zur Längsachse A2 verlaufen. Durch diese Ausgestaltung, das heißt Kombination einer durch den Werkstoff hergestellten Anisotropie mit einer konstruktiven Anisotropie, wird der Effekt der Torsions-Biege-Kopplung nochmals verstärkt. Das heißt, bei gleichem eingeleitetem Torsionsmoment $M_Y$ wird eine nochmals größere Biegeverformung erzielt als bei der Ausführungsform gemäß Figur 15 bzw. Figur 16.

Alle der obengenannten erfindungsgemäßen Querträger 5 beziehungsweise aus einem erfindungsgemäßen Querträger 5 und damit verbundenen Längslenkern 3, 4 zusammengesetzten Verbundlenkerachsen 2, haben den Vorteil, dass die Struktur des Querträgers 5 bei Einleitung eines Torsionsmoments eine Biegeverformung erzeugt, welche dem Eigenlenkverhalten des Kraftfahrzeugs bei Kurvenfahrt entgegenwirkt. Auf diese Weise werden die fahrdynamischen Eigenschaften verbessert und es wird insbesondere ein Übersteuern des Kraftfahrzeugs verhindert.

Im folgenden werden die Berechnungsgrundlagen zur Bestimmung der Kopplungskoeffizienten zwischen der Biegung und der Torsion für einen erfindungsgemäßen Querträger 5 für die erfindungsgemäßen Ausführungsformen angegeben.

Für die Ermittlung der Kopplungskoeffizienten zwischen Biegung und Torsion wird die Drillung eines geraden Stabes bei der Wirkung des Torsionsmoments $M_t$. Der Drehwinkel $\vartheta$ ist

$$(1) \qquad \vartheta = \frac{M_t}{C_t}.$$

Die Torsionssteifheit $C_t$ wird durch die "isotrope Torsionssteifheit" C, geometrische Trägheitsmomente des

Querschnitts $I_1$, $I_2$ sowie Elastizitätskonstanten $a_{33}$, $a_{34}$, $a_{35}$ angegeben:

$$(2) \qquad C_t = \frac{\overline{C}}{1 + \dfrac{\overline{C}}{4a_{33}}\left(\dfrac{a_{34}^2}{I_2} + \dfrac{a_{35}^2}{I_1}\right)}$$

Die Torsions-Biege-Kopplung findet dann statt, wenn die Kopplung zwischen Dehnungen und Schubverzerrungen vorhanden ist. Die Orthotropie bezeichnet Werkstoffe, die richtungsabhängige Elastizitätseigenschaften haben, jedoch keine Kopplung zwischen Dehnungen und Schubverzerrungen besitzen. In diesem Fall gilt $a_{34} = a_{35} = 0$. Da es sich um ein richtungsabhängiges Verhalten handelt, ist die Orthotropie immer auf ein bestimmtes Koordinatensystem bezogen. Orthotrope Werkstoffe sind in ihren Symmetrieachsen orthotrop. Falls die Symmetrieachsen des Werkstoffs mit der Geometrieachsen des Querträgers übereinstimmen, findet keine durch die Anisotropie verursachte Kopplung statt. Außerhalb dieses Koordinatensystems ist ein orthotroper Werkstoff in der Regel anisotrop. In diesem Fall im Koordinatesystem {x,y,z} gilt $a_{34} \neq 0, a_{35} \neq 0$ und es findet eine durch die Anisotropie verursachte Kopplung auch für einen orthotropen Werkstoff statt.

Die verformte Mittellinie des Stabes wird durch die Gleichungen bestimmt:

$$(3) \qquad x(z) = \begin{cases} -\dfrac{M_t}{4I_2} a_{34} z\left(\dfrac{B}{2} - z\right), & 0 < z < \dfrac{B}{2} \\[2ex] -\dfrac{M_t}{4I_2} a_{34} z\left(z - \dfrac{B}{2}\right), & \dfrac{B}{2} < z < B \end{cases}$$

$$(4) \qquad y(z) = \begin{cases} \dfrac{M_t}{4I_1} a_{35} z\left(\dfrac{B}{2} - z\right), & 0 < z < \dfrac{B}{2} \\[2ex] \dfrac{M_t}{4I_1} a_{35} z\left(z - \dfrac{B}{2}\right), & \dfrac{B}{2} < z < B \end{cases}$$

Die verformte Mittellinie besitzt also eine räumliche S-Form, wobei der Winkel zur Z-Achse $\delta(z)$ infolge Drehmoments $M_t$ durch die Ableitung angegeben wird

$$(5) \qquad \gamma(z) = \frac{dx}{dz} = \begin{cases} -\dfrac{M_t}{4I_2} a_{34}\left(\dfrac{B}{2} - 2z\right), & 0 < z < \dfrac{B}{2} \\[2ex] -\dfrac{M_t}{4I_2} a_{34}\left(2z - \dfrac{B}{2}\right), & \dfrac{B}{2} < z < B \end{cases}$$

Die Lenkwinkel am rechten Rad $\delta_{HR}$ und am linken Rad $\delta_{HL}$ als Funktionen des Moments $\boldsymbol{M_t}$ sind also

$$(6) \qquad \delta_{HL} = \gamma\left(z = -\frac{B}{2}\right) = \frac{M_t}{4I_2} a_{34} \frac{B}{2}, \qquad \delta_{HR} = \gamma\left(z = \frac{B}{2}\right) = \frac{M_t}{4I_2} a_{34} \frac{B}{2}.$$

Die Lenkwinkel am rechten Rad $\delta_{HR}$ und linken Rad $\delta_{HL}$ sind demnächst gleich zueinander $\delta_H = \delta_{HR} = \delta_{HL}$
Die verformte Mittellinie bildet einen Winkel $\varepsilon(z)$ zur X-Achse. Dieser Winkel wird durch folgende Ableitung

angegeben

$$(7) \qquad \lambda(z) = \frac{dy}{dz} = \begin{cases} \dfrac{M_t}{4I_1} a_{35} \left( \dfrac{B}{2} - 2z \right), & 0 < z < \dfrac{B}{2} \\[2ex] \dfrac{M_t}{4I_1} a_{35} \left( 2z - \dfrac{B}{2} \right), & \dfrac{B}{2} < z < B \end{cases}$$

Der Sturzwinkel am rechten Rad $\varepsilon_{HR}$ und der Sturzwinkel am linken Rad $\varepsilon_{HL}$ der Hinterachse als Funktion des Moments $M_t$ ergeben sich als

$$(8) \qquad \varepsilon_{HR} = \lambda\left( z = -\frac{B}{2} \right) = -\frac{M_t}{4I_1} a_{35} \frac{B}{2}, \qquad \varepsilon_{HR} = \lambda\left( z = \frac{B}{2} \right) = -\frac{M_t}{4I_1} a_{35} \frac{B}{2}.$$

Diese Winkel sind auch gleich zu einander, falls die Achse antisymmetrisch bezüglich Fahrzeugmittelebene ausgeführt wird: $\varepsilon_H = \varepsilon_{HR} = \varepsilon_{HL}$.

Das Torsionsmoment $M_t$ des Querträgers 2 hängt vom Wankmoment $M_x$ ab:

$$(9) \qquad M_t = \frac{L}{B} M_x \ .$$

Das Einsetzen (46) in die Gleichungen (43) und (45) ergibt die Formeln zur Lenkwinkel und Sturzwinkel der Achse

$$(10) \qquad \delta_H = \frac{a_{34}L}{8I_2} M_x = \frac{a_{34}R_r L}{8I_2} \phi, \ \text{wobei} \ k_\delta = \frac{\delta_H}{\phi} = \frac{a_{34}R_r L}{8I_2}.$$

$$(11) \qquad \varepsilon_H = \frac{a_{35}L}{8I_1} M_x = \frac{a_{35}R_r L}{8I_1} \phi, \ \text{wobei} \ k_\varepsilon = \frac{\varepsilon_H}{\phi} = \frac{a_{35}R_r L}{8I_1}.$$

Mit diesen Gleichungen sind die Lenkwinkel und Sturzwinkel eindeutig als lineare Funktionen des Wankmoments $M_x$ oder Wankwinkels $\phi$ bestimmt. Die Anpassung der Parameter in die Gleichungen (10) und (11) ermöglicht die gewünschte Einstellung des Eigenlenkverhaltens des Fahrzeuges und die Veränderung des Sturzwinkels bei der Kurvenfahrt.

Die erfindungsgemäße Verbundlenkerachse 2 wird durch den Kopplungsparameter eindeutig definiert. Der Kopplungsparameter ist das Verhältnis des Lenkwinkels am Radträger in Z-Richtung zum Drehwinkel der Verbundlenkerachse in Y-Richtung. Wenn der Kopplungsparameter positiv ist, gleicht das Koppelbiegemoment das Biegemoment infolge der Fliehkraft $F_F$ aus und kompensiert die negative Tendenz zum Übersteuern.

In den Figuren 18 bis 20 sind die Verformungen von Verbundlenkerachsen gemäß Simulationsberechnungen dargestellt.

Figur 18 zeigt die Verformung einer herkömmlichen Verbundlenkerachse 2', wie sie sich beim Durchfahren einer Rechtskurve, das heißt in Pfeilrichtung P, ergibt. Es ist erkennbar, dass der Längslenker 3' an der Kurvenaußenseite, das heißt am einfedernden Rad, sich in Richtung Mittelebene $E_{ZX}$ verbiegt, das heißt unterhalb des Kraftfahrzeugs. Der Längslenker 4' an der Kurveninnenseite, das heißt am ausfedernden Rad, verbiegt sich in Richtung zum Kurvenmittelpunkt, um den das Fahrzeugs fährt. Durch diese Verbiegungen entsteht an der Hinterachse ein zusätzlicher Lenkwinkel

$\delta_H$, der zum Übersteuern des Kraftfahrzeugs führt.

Figur 19 zeigt die Verformung einer erfindungsgemäßen Verbundlenkerachse 2 bei Einleitung eines Torsionsmoments $M_Y$ um die Längsachse A2, welches durch das gegenläufige Schwenken der beiden Längslenker 3, 4 beim Durchfahren einer Kurve erzeugt wird. Auch hier wird von einer Rechtskurve ausgegangen. Es ist erkennbar, dass sich der Längslenker 3 an der Kurvenaußenseite des Fahrzeugs (einfederndes Rad) sich zur Außenseite des Fahrzeugs 14 verbiegt. Der Längslenker 9 an der Kurveninnenseite des Fahrzeugs 14 (ausfederndes Rad 13) taucht leicht unter die Fahrzeugkarosserie. Dabei schwenken beide Räder 12, 13 vom Kurvenmittelpunkt, um den das Fahrzeug 14 eine Kurve beschreibt, weg.

Figur 20 zeigt die Verformung der erfindungsgemäßen Verbundlenkerachse 2, wie sie sich beim Durchfahren einer Rechtskurve, das heißt in Pfeilrichtung P, ergibt. Wie oben erläutert, verursacht das Wanken des Fahrzeugs 14 eine Torsion des Querträgers 5 zwischen dem linken und rechten Längslenker 3, 4. Durch die erfindungsgemäße Kopplung zwischen Torsion und Biegung des Querträgers 5 um die Z-Achse wird ein Koppelbiegemoment um die nach obengerichtete Z-Achse erreicht. Die so bewirkte Biegeverformung des Querträgers 5 wirkt der Verformung aufgrund des Eigenlenkverhaltens, wie sie in Figur 18 dargestellt ist, entgegen. Die beiden Querlenker 3, 4 sind parallel zueinander und zur Mittelebene $E_{ZX}$ angeordnet. Die Verformung aufgrund des Eigenlenkverhaltens wird von der Verformung aufgrund der Torsions-Biege-Kopplung aufgehoben. Insofern führt die erfindungsgemäße Struktur des Querträgers 5 zu einer Kompensation der Verbiegung des Querträgers 5, so dass im Enddefekt ein Übersteuern des Kraftfahrzeugs verhindert wird. Dieser Effekt kann mit jeder der obengenannten erfindungsgemäßen Verbundlenkerachsen 2, welche ein Koppelbiegemoment um die Z-Achse erzeugen, erreicht werden.

Bezugszeichenliste

2    Verbundlenkerachse

3    erster Längslenker

4    zweiter Längslenker

5    Querträger

6    vorderes Ende

7    vorderes Ende

8    hinters Ende

9    hinteres Ende

10   Achszapfen

11   Achszapfen

12   vorderes Rad

13   vorderes Rad

14   Kraftfahrzeug

15   hinteres Rad

16   hinteres Rad

18   Faser

19   Abschnitt

20 Abschnitt

21 Schicht/Element

22 Schicht/Element

23 Schicht/Element

24 absolutes Maximum

25 absolutes Maximum

26 absolutes Minimum

27 Übergangsabschnitt

28 Übergangsabschnitt

28 Spalt

29 Abschnitt

30 Abschnitt

31 Faser

32 Gewebe

33 Laminate

34 mittlerer Abschnitt

35 endseitiger Abschnitt

36 endseitiger Abschnitt

A Achse

F Kraft

M Drehmoment

E Ebene

P Pfeil

W Momentanpol

L, H. Q Achsen

X, Y, Z Achsen

**Patentansprüche**

1. Querträger für eine Verbundlenkerachse eines Kraftfahrzeugs,
   wobei der Querträger (5) eine Längsachse (A2) aufweist und elastisch verformbar ist, und
   wobei der Querträger (5) eine Struktur aufweist, die derart gestaltet ist, dass eine elastische Torsionsverformung, die aufgrund eines um die Längsachse (A2) wirksamen Torsionsmoments (M$_Y$) entsteht, eine elastische Biegeverformung des Querträgers (5) bewirkt, wobei die Struktur einzelne Strukturelemente (18, 27, 28) aufweist, die relativ zur Längsachse (A2) winklig verlaufen, wobei diese Strukturelemente (18, 27, 28) in Bezug auf eine Ebene (E$_{ZX}$), die senkrecht zur Längsachse (A2) verläuft und den Querträger mittig teilt, symmetrisch sind.

2. Querträger nach Anspruch 2, **dadurch gekennzeichnet, dass** die Strukturelemente (18, 27, 28) relativ zu einer zweiten Ebene (E$_{XY}$), welche senkrecht zur ersten Ebene (E$_{ZX}$) angeordnet ist und die Längsachse (A2) beinhaltet, asymmetrisch sind.

3. Querträger nach Anspruch 3, **dadurch gekennzeichnet, dass** die Strukturelemente (18, 27, 28) in Bezug auf eine dritte Ebene (EYZ), welche senkrecht zur zweiten Ebene (E$_{XY}$) angeordnet ist und die Längsachse (A2) beinhaltet symmetrisch sind.

4. Querträger nach einem der Ansprüche 1 bis 3, **dadurch gekennzeichnet, dass** dieser zumindest zwei längliche Abschnitte (21, 22, 23, 23') aufweist, die miteinander verbunden sind, wobei zumindest einer der länglichen Abschnitte (21, 22) zumindest weitestgehend strukturelementfrei gestaltet ist und wobei zumindest ein anderer der länglichen Abschnitte (23, 23') winklig zur Längsachse (A2) verlaufende Strukturelemente (18, 27, 28; 27', 28') aufweist oder durch diese gebildet ist.

5. Querträger nach Anspruch 4, **dadurch gekennzeichnet, dass** dass der Strukturelemente (18, 27, 28; 27', 28') aufweisende Abschnit (23) zwischen zwei zumindest weitestgehend strukturelementfreien Abschnitten (21, 22) angeordnet und mit diesen verbunden ist. ,

6. Querträger nach einem der Ansprüche 1 bis 5, **dadurch gekennzeichnet, dass** dieser aus einem Werkstoff mit richtungsabhängigem Verhalten, insbesondere aus einem Faserverbundwerkstoff, hergestellt ist.

7. Querträger nach Anspruch 6, **dadurch gekennzeichnet, dass** die Strukturelemente (18) durch Fasern (18) des Faserverbundwerkstoffs gebildet werden, die zumindest abschnittsweise mit der Längsachse (A2) des Querträgers (5) einen spitzen Winkel einschließen.

8. Querträger nach Anspruch 6 oder 7, **dadurch gekennzeichnet, dass** zumindest eine Teilzahl der Fasern (18) des Faserverbundwerkstoffs um die Längsachse (A2) gewickelt ist, wobei die Fasern (18) in einem ersten Umfangsabschnitt einen ersten Steigungswinkel ($\alpha$1) und in einem zweiten Umfangsabschnitt einen zweiten Steigungswinkel ($\alpha$2) relativ zur Längsachse (A2) des Querträgers (5) haben, wobei der erste Steigungswinkel ($\alpha$1) und der zweite Steigungswinkel ($\alpha$2) unterschiedlich groß sind.

9. Querträger nach einem der Ansprüche 1 bis 5, **dadurch gekennzeichnet, dass** dieser aus einem Werkstoff mit richtungsunabhängigem Verhalten, insbesondere einem Stahlwerkstoff, hergestellt ist.

10. Querträger nach Anspruch 9, **dadurch gekennzeichnet, dass** die zumindest zwei länglichen Abschnitte (21, 22, 23, 23') in Form von einzelnen länglichen Elementen gestaltet sind, die miteinander verbunden sind.

11. Querträger nach Anspruch 10, **dadurch gekennzeichnet, dass** das zumindest eine winklig verlaufende längliche Element (23, 23') eine größere Länge aufweist als zumindest ein weiteres der längliche Elemente (21, 22).

12. Querträger nach einem der Ansprüche 9 bis 11, **dadurch gekennzeichnet, dass** ein erstes und ein zweites längliches Element (21, 22) parallel und mit Abstand zueinander angeordnet sind und dass ein drittes längliches Element (23) zwischen dem ersten und zweiten länglichen Elementen (21, 22) angeordnet ist, wobei das dritte längliche Element (23) zumindest in einem Teilbereich einen größeren Winkel ($\alpha$) mit der Längsachse (B) einschließt als das erste und zweite längliche Element (21, 22).

13. Verbundlenker für ein Kraftfahrzeug mit einem ersten Längslenker (8), einem zweiten Längslenker (9) und einem den ersten und den zweiten Längslenker (3, 4) miteinander verbindenden Querträger (5), **dadurch gekennzeichnet, dass** der Querträger (5) nach einem der Ansprüche 1 bis 12 gestaltet ist.

14. Verbundlenker nach Anspruch 13, **dadurch gekennzeichnet, dass** der Querträger (5) derart zu den beiden Längslenkern (3, 4) ausgerichtet und an diese angebunden ist, dass, wenn bei Kurvenfahrt des Kraftfahrzeugs ein Torsionsmoment von den Längslenkern (3, 4) auf den Querträger (5) einwirkt, von der Struktur des Querträgers (5) ein dem Eigenlenkverhalten entgegenwirkendes Biegemoment im Querträger (5) erzeugt wird.

15. Verbundlenker nach Anspruch 14, **dadurch gekennzeichnet, dass** der Querträger (5) derart zu den beiden Längslenkern (3, 4) ausgerichtet und an diese angebunden ist, dass, wenn bei Kurvenfahrt des Kraftfahrzeugs ein Biegemoment von den Längslenkern (3, 4) auf den Querträger (5) einwirkt, von der Struktur des Querträgers (5) ein dem Eigensturzverhalten entgegenwirkendes Torsionsmoment im Querträger (5) erzeugt wird.

Fig. 2a

Fig. 2b

Fig. 1a

Fig. 1b

Fig. 3

Fig. 4c

Fig. 4d

Fig. 4a

Fig. 4b

EP 2 418 110 A2

Fig. 4e

Fig. 4f

Fig. 5a

Fig. 5b

Fig. 6a

Fig. 6b

Fig. 6c

Fig. 9a

Fig. 9b

Fig. 8a

Fig. 8b

Fig. 7a

Fig. 7b

Fig. 10a

Fig. 10b

EP 2 418 110 A2

Fig. 12a

Fig. 12b

Fig. 11a

Fig. 11b

Fig. 13a

Fig. 13b

Fig. 13c

Fig. 14a

Fig. 14b

EP 2 418 110 A2

Fig. 15a

Fig. 15b

Fig. 16

Fig. 17

Fig. 18a

Fig. 19a

Fig. 20a

Fig. 18b

Fig. 19b

Fig. 20b

EP 2 418 110 A2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3530353 A1
- DE 10357885 A1
- DE 102006056421 A1
- DE 102008001989 A1
- WO 02081239 A1
- DE 10254556 A1

- DE 4330192 A1
- DE 19542105 A1
- DE 102004055099 A1
- DE 102006041567 A1
- DE 602005002921 T2
- WO 2010004370 A1

**In der Beschreibung aufgeführte Nicht-Patentliteratur**

- **VON PROF. DR. JOHANNES WIEDEMANN.** Leichtbau, Elemente und Konstruktion. Springer Verlag